(19) **Europäisches Patentamt**

**European Patent Office**

**Office européen des brevets**

(11) **EP 0 967 573 B1**

(12) **FASCICULE DE BREVET EUROPEEN**

(45) Date de publication et mention
de la délivrance du brevet:
**26.03.2003 Bulletin 2003/13**

(51) Int Cl.⁷: **G06T 5/20**

(21) Numéro de dépôt: **99401465.2**

(22) Date de dépôt: **15.06.1999**

(54) **Dispositif de traitement de données d'acquisition, notamment de données d'image**

Vorrichtung zur Bearbeitung von erfassten Daten, insbesondere Bilddaten

Apparatus for the treatment of acquisition data, of image data in particular

(84) Etats contractants désignés:
**BE DE ES GB IT NL SE**

(30) Priorité: **25.06.1998 FR 9808087**

(43) Date de publication de la demande:
**29.12.1999 Bulletin 1999/52**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
• **Malandain, Grégoire
06600 Antibes (FR)**
• **Robert, Luc
06560 Valbonne (FR)**

(74) Mandataire: **Plaçais, Jean-Yves et al
Cabinet Netter,
36, avenue Hoche
75008 Paris (FR)**

(56) Documents cités:
**US-A- 4 606 066     US-A- 4 807 297**

**Description**

L'invention concerne le domaine des traitements de données d'acquisition. Ces données sont relatives à des représentations physiques telles que des images bidimensionnelles ou tridimensionnelles, pour lesquelles il est possible de définir une relation de voisinage entre les éléments qui les constituent.

De telles données d'acquisition se présentent sous la forme d'une séquence d'éléments, comprenant au moins un bit par élément. Dans le cas d'une image bidimensionnelle, chaque élément de l'image (ou pixel) possède des attributs propres, par exemple des couleurs et/ou des niveaux de gris codés sur un certain nombre de bits. Ainsi, on comprendra que les pixels d'un trait d'une image bidimensionnelle bicolore en noir et blanc, peuvent comporter un attribut "noir", tandis que les pixels du fond comportent un attribut "blanc". Ces attributs sont alors codés sur un bit "0" ou "1", par exemple "0" pour "blanc" et "1" pour "noir". Quant à la position du pixel, elle peut être codée suivant la colonne et la ligne auxquelles il appartient. Ces deux données sont généralement enregistrées en mémoire pour en extraire des informations de l'image (ensembles de points caractéristiques), ou encore pour créer par la suite des modifications de l'image, telles qu'une érosion, une dilatation, et/ou un amincissement de traits (et/ou de surfaces, dans le cas d'une image tridimensionnelle).

Ces divers traitements consistent généralement à attribuer à un élément courant, un "mot-résultat", fonction d'une comparaison des bits respectifs d'éléments voisins dans la séquence de cet élément courant. En pratique, cette comparaison s'effectue à partir d'une succession de tests sur les bits des éléments qui définissent un voisinage choisi de l'élément courant.

Les dispositifs classiques effectuant de tels traitements, procèdent suivant deux techniques générales distinctes. Une première technique consiste à reproduire systématiquement l'opération de traitement choisie. Il est alors fréquent que la valeur de bit de l'un des voisins de l'élément courant, soit testée plusieurs fois en cours de traitement. Une seconde technique propose de remédier à ce problème en prévoyant, à l'issue de chaque test d'un élément du voisinage, deux tests d'un autre élément du voisinage. L'un et l'autre de ces tests correspondent respectivement aux valeurs de bit "0" et "1" de l'élément préalablement testé. Ainsi, le nombre de tests à effectuer équivaut sensiblement au nombre d'éléments à considérer dans le voisinage. Cependant, le nombre de tests à prévoir croît comme $2^n$ en fonction du nombre n d'éléments.

Les tests du type précité se font souvent au moyen de programmes informatiques. Les programmes qui appliquent la première technique comportent un nombre réduit d'instructions, mais nécessitent des temps d'exécution particulièrement longs. A l'inverse, les programmes qui appliquent la seconde technique présentent des temps d'exécution satisfaisants, mais comprennent en moyenne une instruction par test prévu et peuvent atteindre des longueurs rédhibitoires, ce qui tend à accroître la charge du traitement.

La présente invention vient améliorer la situation.

Elle part alors d'un dispositif de traitement de données d'acquisition, comprenant :

a) une première zone mémoire pour stocker une séquence de données d'acquisition, sous la forme d'éléments de séquence, ayant chacun au moins un bit,
b) une seconde zone mémoire comprenant un module d'accès à la première zone mémoire, laquelle est adressable pour accéder au voisinage d'un élément courant désigné,
c) une troisième zone mémoire pour stocker un module de calcul, apte à recevoir en entrée une désignation d'au moins un élément courant, afin de délivrer en sortie un mot-résultat représentatif de l'application d'une fonction de traitement choisie, audit voisinage de cet élément courant, ce module comprenant un jeu d'instructions, avec des instructions-tests, portant chacune sur un bit, et formant à partir d'une instruction d'entrée, des trajets où les instructions-tests se relaient pour aboutir à des instructions finales définissant le mot-résultat, bit par bit,
d) des moyens de commande pour mettre en oeuvre répétitivement ce module en coopération avec une mémoire de travail, sur la base d'éléments courants successifs, afin d'obtenir une multiplicité de mots-résultats, représentant un transformé au moins partiel de la séquence par ladite fonction de traitement.

Selon l'invention, le module de calcul est muni d'un jeu d'instructions optimisé par une technique de réduction d'arbre de décision binaire associé à ladite fonction, pour minimiser conjointement le nombre total d'instructions-tests cumulées sur l'ensemble des trajets définis par le jeu d'instructions-tests, et le nombre total d'instructions de ce jeu. Ainsi, la vitesse moyenne du traitement est accrue par un meilleur compromis entre l'encombrement mémoire du jeu d'instructions et sa rapidité d'exécution.

Selon un mode de réalisation préféré de la présente invention, chaque instruction-test comporte un branchement conditionnel vers une autre instruction-test ou une instruction finale, fonction du bit testé, et le module comporte, en zone mémoire, au plus deux instructions finales. Avantageusement, le jeu d'instructions-tests n'accède, en cours d'exécution, qu'une fois au plus, à un bit d'un élément du voisinage, tandis que les instructions-tests se relaient, en cours d'exécution, jusqu'à l'une des deux instructions finales, agencée pour désigner une variable-résultat représentative d'un bit du mot-résultat.

Selon une autre caractéristique avantageuse de l'invention, le jeu d'instructions-tests comporte des instructions-tests à branchements inverseurs, tandis que chaque bit du mot-résultat est défini en correspondance de la variable-résultat associée et d'une parité du nombre de branchements inverseurs empruntés en cours d'exécution.

D'autres caractéristiques et avantages de l'invention apparaîtront à l'examen de la description détaillée ci-après, donnée à titre d'exemple, de ses annexes et des dessins sur lesquels :

- la figure 1 représente schématiquement un dispositif de traitement de séquence en montrant en particulier les interactions entre les différents systèmes qu'il comprend dans l'exemple décrit,

- la figure 2a représente, à titre d'exemple, l'arborescence brute d'une fonction simple qui à deux variables logiques $x_1$ et $x_2$ associe leur somme $x_1 + x_2$, correspondant à la fonction booléenne "ou",

- la figure 2b représente un diagramme de décision binaire quelconque associé à la fonction somme,

- la figure 2c représente le diagramme de décision binaire réduit et ordonné, associé à cette fonction,

- la figure 3 représente, dans l'exemple décrit, le voisinage associé à un élément courant dans une image bidimensionnelle,

- les figures 4a et 4b représentent les effets respectifs d'une érosion et d'une dilatation d'une image bidimensionnelle,

- les figures 5a et 5b représentent les diagrammes de décision binaire réduits et ordonnés, respectivement associés à une érosion et à une dilatation d'une image bidimensionnelle,

- la figure 6a représente un voisinage associé à trois éléments courants contigus, dans l'exemple, d'une image bidimensionnelle pour le traitement d'une pluralité d'éléments courants à la fois par une érosion et/ou une dilatation d'image bidimensionnelle, ces trois éléments courants étant numérotés V4, V7 et V10,

- la figure 6b représente les numérotations des trois éléments pour lesquels le traitement choisi attribue à chacun un bit-résultat, l'ensemble des bits-résultats formant un mot-résultat,

- la figure 7 représente le diagramme de décision binaire réduit et ordonné, avec branchements inverseurs, associé à une dilatation d'image bidimensionnelle, sur un voisinage de trois éléments courants contigus, inclus dans ce voisinage,

- la figure 8 représente le diagramme de décision binaire réduit et ordonné, avec branchements inverseurs, associé à une érosion d'image bidimensionnelle, sur un voisinage de trois éléments courants contigus, inclus dans ce voisinage,

- les figures 9a, 9b et 9c représentent des exemples de voisinages dans lesquels l'élément central courant et représenté par une croix est considéré comme un point simple d'une image bidimensionnelle, suivant un critère de connexité choisi dans l'exemple décrit, cet élément courant ne faisant pas partie du voisinage considéré,

- les figures 9d, 9e et 9f représentent des exemples de voisinages dans lesquels l'élément central n'est pas un point simple suivant le même critère de connexité,

- la figure 10 représente le diagramme de décision binaire réduit et ordonné, avec des branchements inverseurs, associé à la détection de points simples d'une image bidimensionnelle, et

- les figures 11a et 11b représentent respectivement les vues de dessus et de dessous des voisinages choisis dans l'exemple décrit, pour le traitement d'une image tridimensionnelle par amincissement de traits et/ou de surfaces.

- En annexe I est retranscrit un traitement, permettant la détection de points simples d'une image bidimensionnelle, et construit, selon l'invention, à partir d'un diagramme de décision binaire réduit et ordonné, comportant des branchements inverseurs. Le traitement, compilé en langage C, comprend en chaque ligne un test et deux branchements. Le début de cette annexe I décrit une fonction en langage C, commentée et faisant intervenir des éléments utilisés pour la détection de points simples (critère de connexité), indépendamment de toute considération d'arborescence des tests.

- En annexe II est retranscrit le traitement informatique de l'annexe I, compilé en langage C et comportant des tests imbriqués.

- En annexe III est retranscrit un traitement permettant la détection de points simples d'une image tridimensionnelle, et construit sur la base d'un diagramme de décision binaire réduit et ordonné, comportant des branchements inverseurs.

- Enfin, en annexe IV est retranscrit un traitement informatique compilé en langage C, permettant la détection de points simples qui ne sont pas des points d'extrémités, et construit sur la base d'un diagramme de décision binaire réduit et ordonné, comportant des branchements inverseurs.

Les dessins et les annexes contiennent, pour l'essentiel, des éléments de caractère certain. Ils pourront donc non seulement servir à mieux faire comprendre la description, mais aussi contribuer à la définition de l'invention, le cas échéant.

Les documents faisant partie de l'art antérieur, et cités ci-après, sont analysés avec la même terminologie que celle utilisée pour décrire la présente invention. Il en découle une interprétation qui peut aller au-delà du contenu objectif desdits documents, aux yeux d'homme du métier ne connaissant pas encore l'invention.

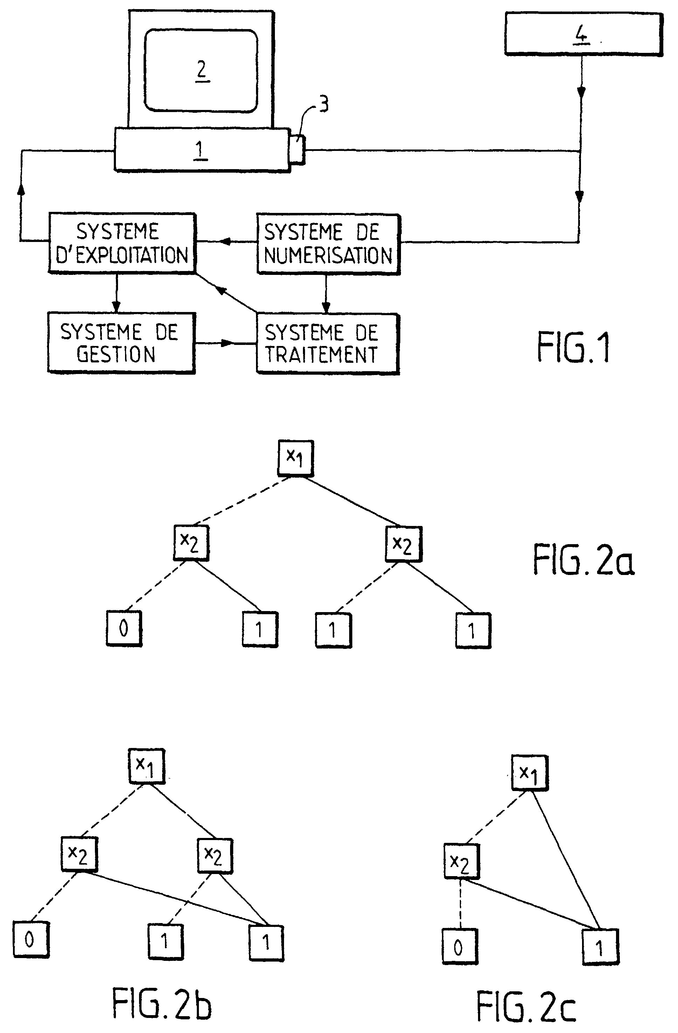

On se réfère tout d'abord à la figure 1 qui représente un dispositif de traitement d'une séquence qui, dans l'exemple décrit, est une image bidimensionnelle ou tridimensionnelle. Un tel dispositif peut comporter un ordinateur 1 muni d'une mémoire et d'une unité centrale avec un processeur, animés par un système d'exploitation, par exemple un environnement de type Windows, DOS ou UNIX (marques déposées). L'ordinateur est équipé d'un écran de contrôle 2 et d'un périphérique utilisateur 3 pour recevoir la séquence à traiter, par exemple une image à deux dimensions d'un scanner numérique simple, d'une caméra à CCD, ou encore une image à trois dimensions issue d'un ensemble de sondes ou d'un scanneur médical.

Dans le cas, par exemple, d'un scanneur médical, l'appareil de radio-diagnostic est composé d'un système de tomographie et d'un ordinateur qui en analyse les données pour reconstituer des images de diverses parties d'un organisme, en coupes fines. L'image à traiter peut être une image médicale représentant un tissu biologique humain. Dans ce cas, il est souvent nécessaire de pré-traiter l'image par amincissement de traits et/ou de surfaces, ou encore par érosion ou par dilatation, pour faire ressortir par exemple des vaisseaux sanguins du tissu sur un fond de couleur différente.

Dans les dispositifs classiques de traitement d'images, on rencontre souvent un système de numérisation incorporé dans l'ordinateur sous forme de logiciel de numérisation, ou encore incorporé à un scanneur en entrée du périphérique utilisateur 3. Généralement, le système de numérisation coopère avec le système d'exploitation pour échantillonner la séquence en une multiplicité d'éléments. Par exemple, pour une image bidimensionnelle, le système de numérisation peut échantillonner l'image en plusieurs éléments communément appelés "pixels". Il peut encore subdiviser une image tridimensionnelle en une multiplicité d'éléments parallélépipédiques, appelés "pavés" ou encore "voxels". Ensuite, le système d'exploitation coopère avec le système de numérisation pour enregistrer en mémoire de l'ordinateur 1, de façon ordonnée, les attributs et positions respectifs des éléments dans la séquence.

Dans l'exemple décrit, le dispositif de traitement comprend un système gestion de l'image qui peut se présenter sous la forme d'un logiciel offrant la possibilité à un utilisateur de choisir un traitement parmi une érosion, une dilatation et un amincissement de traits et/ou de surfaces. Le dispositif de traitement attribue à un pixel (ou voxel) courant X, un bit-résultat, fonction du type de traitement choisi, en comparant les bits des pixels (ou voxels) voisins de ce pixel (ou voxel) courant X.

Dans le cas par exemple d'un amincissement de traits d'une image bidimensionnelle, le dispositif est agencé pour effectuer une recherche de points simples et comprend en outre des moyens de détection de points d'extrémité pour amincir les traits de l'image. En pratique, il s'agit de modifier les valeurs de bits de points simples qui ne sont pas des points d'extrémité pour que, dans l'image traitée, ils apparaissent dans le fond. Le système de gestion propose ensuite à un utilisateur, via l'écran de contrôle 2, une image dont les traits sont amincis suivant des critères qui seront décrits plus loin.

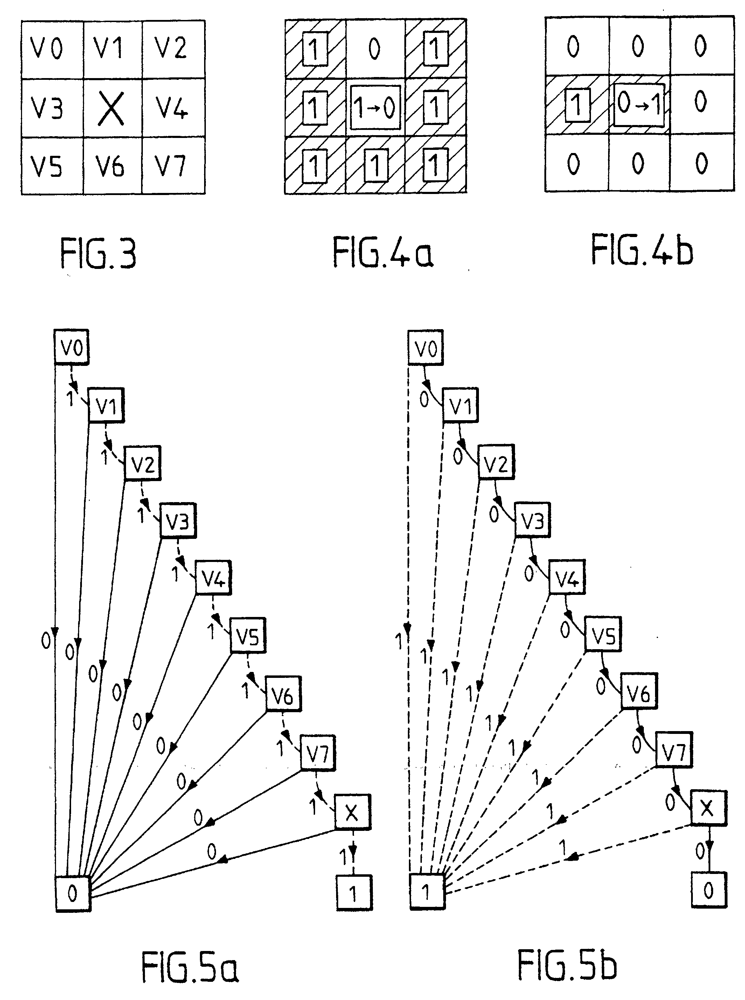

Le dispositif comporte un module pour accéder, dans un premier temps, à une première zone mémoire et pour extraire un élément courant X à traiter, ainsi qu'un ensemble d'éléments voisins de cet élément courant. Au préalable, on définit une relation de voisinage entre les éléments, en fonction du type de traitement désiré. Par exemple, pour une image bidimensionnelle, le voisinage d'un pixel courant peut être constitué de ses 8 voisins immédiats, et éventuellement du pixel courant lui-même (figure 3). Pour une image tridimensionnelle, ce voisinage peut s'étendre à 26 premiers voisins (figures 11a et 11b). Le module d'accès du dispositif comprend un ensemble d'instructions d'appel, stockées dans une seconde zone mémoire.

Le dispositif comporte en outre un module de calcul stocké dans une troisième zone mémoire. Ce module comprend un jeu d'instructions-tests apte à comparer les bits respectifs des éléments du voisinage, en effectuant une succession de tests sur ces éléments, pour attribuer éventuellement une nouvelle valeur de bit à l'élément courant X, en fonction de cette comparaison. Les nouvelles valeurs de bits des éléments traités sont enfin transmises au système d'exploitation pour être enregistrées en mémoire. La procédure de comparaison s'appuie, selon l'invention, sur la structure d'un diagramme de décision binaire.

Parmi les techniques sur lesquelles se basent les moyens de traitement (ou de pré-traitement) classiques, de nombreux procédés s'appuient sur l'évaluation des bits de pixels ou de pavés avoisinant un pixel ou un pavé de l'image. Chacune de ces méthodes utilise une fonction qui, pour un élément donné de l'image, analyse les valeurs binaires (ou bits) de ses voisins. Cette fonction est généralement évaluée plusieurs fois pendant la procédure d'analyse.

Une approche classique consiste à construire une table d'entrées (traduction du terme anglo-saxon "look-up table"), brute, pour tous les éléments de voisinage. Cette approche est connue notamment par la référence :

[1]- "An algorithm for a 3D simplicity test" (L. LATECKI et C.C. MA, *Computer Vision and Image Understanding*, 63(2): 388-393, Mars 1996)

Toutes les variables en entrée sont alors examinées une fois de manière à leur attribuer une adresse dans la table. Ainsi, si l'on doit considérer N éléments du voisinage, le nombre d'entrées dans la table doit être de $2^N$. Dans le cas d'une image tridimensionnelle, les limites de capacité de calcul et de mémoire de l'ordinateur utilisé sont vite atteintes. Une réduction du nombre de tests peut parfois être envisagée en tenant compte de certaines symétries du problème. Toutefois, les tests prévus suivent toujours une arborescence symétrique, de type "quad-tree" (terme anglo-saxon).

L'approche selon l'invention s'appuie sur l'utilisation des diagrammes de décision binaire (DDB) en tant que représentation adéquates de fonctions booléennes traitant des variables booléennes.

Dans un premier temps, on construit un DDB compact qui représente la fonction booléenne à évaluer. Il peut s'agir d'une fonction booléenne formelle, c'est-à-dire simple. Dans ce cas, le DDB associé représente la fonction de manière explicite. Sinon, on procède généralement à la décomposition de la fonction par la méthode dite de "force brute", connue notamment par :

[2]- "An approach to unified Methodology of combinational switching circuits" (E.Cerny, and M.A.Marin, *IEEE Trans. Comput*. C-26, p. 745-756, 1977).

Ensuite, le DDB est compilé en un code puissant, en langage C par exemple.

L'intérêt d'utiliser une expression réduite d'un DDB pour générer un tel code, repose notamment sur le fait que l'on n'examine que les pixels dont la valeur affecte réellement le résultat. De plus, pour chaque pixel examiné, le code n'effectue qu'un seul test, un seul branchement, et dans certaines conditions, une seule opération binaire sur un registre. Cette propriété des codes utilisant des DDB apparaîtra de manière plus claire dans les exemples de traitements d'images décrits ci-après.

Le principe des diagrammes de décision binaire est connu en soi, en particulier en logique combinatoire. Un diagramme de décision binaire représente une fonction booléenne suivant une arborescence acyclique. Chaque noeud de l'arborescence correspond à un test d'une variable booléenne. Cette arborescence comporte deux noeuds terminaux correspondant aux valeurs binaires de la fonction : les niveaux logiques (ou bits) "0" et "1". A titre d'exemple, la figure 2a représente une arborescence associée à une fonction booléenne simple qui a deux variables $x_1$ et $x_2$, associe leur somme $x_1 + x2$, ce qui correspond au "ou" logique.

En imposant un ordre prédéterminé d'analyse des variables et en partageant quelques noeuds de l'arborescence, il est possible de réduire substantiellement la taille de cette arborescence. Dans l'exemple représenté sur la figure 2a, chaque noeud représente un test de type "si" sur une variable. Les traits pleins représentent les branches "alors" et les traits pointillés représentent les branches "sinon". Cette représentation de la fonction "somme" correspond à une arborescence complète selon l'expansion de BOOLE-SHANNON. La représentation sur la figure 2b pour la même fonction, fait alors apparaître que le noeud terminal 1 à gauche de l'arborescence peut être avantageusement supprimé. Le fait de rendre un peu plus compacte cette arborescence suivant un DDB simplifié peut permettre par la suite d'éliminer une instruction dans le traitement programmé d'une telle fonction. La figure 2c montre alors l'un des deux DDB possibles, associé à la fonction "somme" avec, tel que représenté, "$x_1$ avant $x_2$". Le DDB apparaît alors suivant sa forme la plus compacte et ne contient que deux noeuds terminaux. Une telle représentation correspond alors à un DDB dit réduit et ordonné (DDBOR), ne comportant que deux noeuds terminaux.

Cette représentation est canonique, c'est-à-dire que si l'ordre d'analyse des variables est fixé et si les règles de réduction sont appliquées, deux fonctions booléennes équivalentes ont la même représentation par diagramme de décision binaire. Ainsi, la figure 2c représente un DDBOR de la fonction "somme" de la figure 2a.

De manière à rendre encore plus compact le DDBOR obtenu, la méthode dite "des bords complémentaires" peut être utilisée. Cette méthode est connue notamment par la référence :

[3]- "Perfect normal forms for discrete functions" (J.P.BILLON, *Research Report* 87019, BULL, Mars 1987)

Elle permet d'éviter de tester plus d'une fois le même noeud, un caractère binaire distinctif, par exemple + ou -, étant attribué à chaque branche du diagramme. Dans l'exemple décrit, les branches du diagramme portant le signe - agissent alors comme des branchements inverseurs du résultat final.

Pour la suite de la description ci-après, l'abréviation DDB correspond à un "diagramme de décision binaire réduit et ordonné, à bords complémentaires".

Le Demandeur a alors montré que l'utilisation des DDB pouvaient s'appliquer au traitement d'images bidimensionnelles et tridimensionnelles.

Dans le cas d'une image bidimensionnelle, on peut associer à un élément sélectionné un voisinage constitué de huit éléments premiers voisins de l'élément sélectionné et occupant huit positions cardinales respectives : Nord-Ouest, Nord-Est, Est, Sud-Est, Sud, Sud-Ouest, Ouest et Nord. Ces éléments sont notés respectivement V0, V1, V2, V3, V4, V5, V6 et V7. Le choix du voisinage et, en particulier, du nombre d'éléments par voisinage dépend, en fait, du choix de la fonction de traitement $f$. Un voisinage à huit éléments pour le traitement d'une image bidimensionnelle est représenté sur la figure 3.

Dans certains cas, des fonctions de traitement d'images peuvent être représentées directement par des opérations booléennes simples sur les valeurs des pixels du voisinage. Par exemple, dans le cas d'une érosion, si l'on considère un pixel dont la valeur de bit est "1", une nouvelle valeur "0" lui est attribuée si, et seulement si, lui-même et/ou l'un au moins de ses voisins a une valeur de bit égale à "0". Ainsi, la fonction pour modifier la valeur du pixel considéré est équivalente à :

$$f(X) = X.x_1.x_2.x_3...x_n \ ,$$

où "." correspond à la fonction booléenne "et", et les $x_i$ sont les variables booléennes représentant les valeurs de bits des pixels du voisinage du pixel considéré.

Dans le cas d'une dilatation, la fonction $f$ s'exprime par :

$$f(X) = X + x_1 + x_2 + ...x_n \ ,$$

"+" correspondant à la fonction booléenne "ou".

La figure 4a représente l'effet d'une érosion sur un élément central courant X en fonction de ses huit premiers voisins. Un bit de valeur "0" est alors attribué à l'élément sélectionné si lui-même et/ou l'un au moins des éléments de voisinage a un bit "0".

La figure 4b représente l'effet d'une dilatation sur un élément central courant X en fonction de ses huit premiers voisins. Dans ce cas, un "0" logique est attribué à l'élément courant si lui-même et tous les éléments du voisinage ont leur bit égal à "0", sinon un "1" lui attribué.

Les figures 5a et 5b montrent les DDB représentant les fonctions booléennes associées respectivement à une érosion et à une dilatation. Pour une érosion comme pour une dilatation, le DDB de la fonction booléenne constitue une représentation explicite de la fonction.

Les moyens de pré-traitement peuvent se présenter sous la forme d'un traitement informatique programmé, qui suit, selon l'invention, une arborescence équivalente à un DDB d'expression réduite. Il comporte alors une instruction de test pour chaque noeud test du DDB. A chaque test effectué sont associés deux branchements conditionnels. Un premier branchement conditionnel correspond à la valeur de bit "0" du pixel testé et un second branchement conditionnel correspond à la valeur de bit "1" du pixel testé. Ces branchements conditionnels sont équivalents aux branches "alors" et "sinon" du DDB, et mènent à d'autres noeuds du diagramme. Si ce traitement est programmé en langage C par exemple, une ligne test L peut comprendre les instructions suivantes :

L : if (x) goto L1 ; else goto L2 ;

Le traitement prévoyant une arborescence équivalente à un DDB d'ordre réduit comporte alors deux points d'arrêt équivalents aux deux noeuds terminaux du DDB. A ces points d'arrêt sont alors associés des branchements d'interruption qui correspondent à des branches du DDB liant un noeud test à un noeud terminal. Ainsi, le traitement prévoit un ensemble de tests ordonnés par une instruction "if", des branchements conditionnels ordonnés par les instructions "goto" et des points d'arrêt ordonnés par des instructions finales de type "return R" et "return !R". R et !R correspondent à deux états logiques conjugués du point d'arrêt : !R correspond à "non R".

Pour effectuer une érosion et/ou une dilatation d'image, le traitement comprend alors une instruction-test par élément du voisinage, un branchement conditionnel vers une autre instruction-test d'un autre élément du voisinage, et un branchement d'interruption vers un point d'arrêt, et ce pour chaque élément du voisinage.

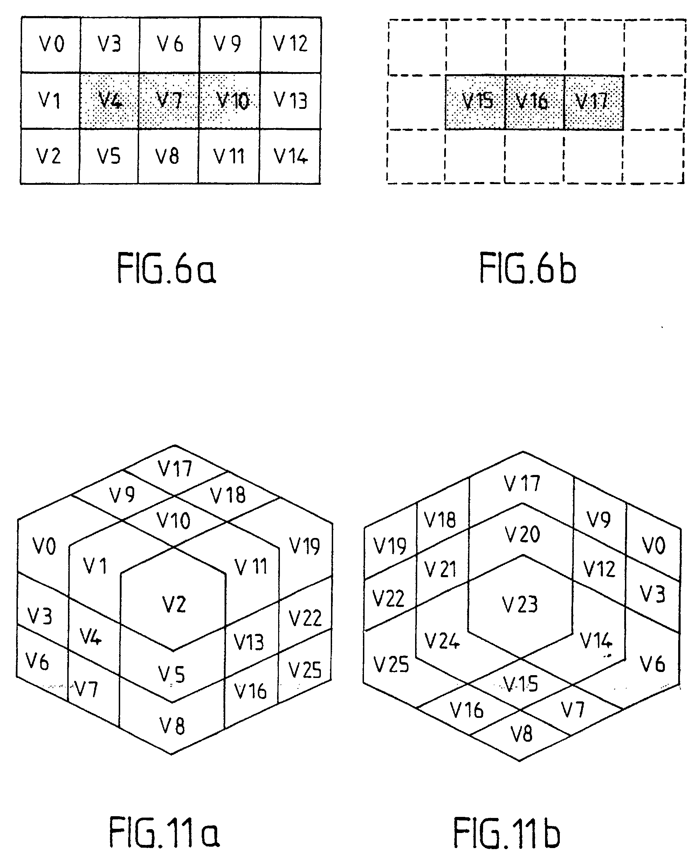

Le traitement peut s'appliquer plus généralement à une pluralité d'éléments courants à traiter, par exemple à trois éléments courants. Le module de calcul est alors agencé pour évaluer un mot-résultat V15-V16-V17 (au lieu d'un seul bit-résultat), sur la base de trois éléments (ou pixels) courants V4, V7, V10 (figure 6a) premiers voisins et contigus dans l'exemple. Chaque comparaison intéresse alors un ensemble d'éléments constitué par l'union des trois groupes de premiers voisins de chacun de ces pixels, et comprenant ainsi 15 éléments V0,...,V14. Les trois bits-résultats correspondant aux bits-résultats respectifs des pixels courants, sont numérotés V15, V16 et V17. V15, V16 et V17 occupent respectivement les mêmes positions que V4, V7 et V10 (figure 6b).

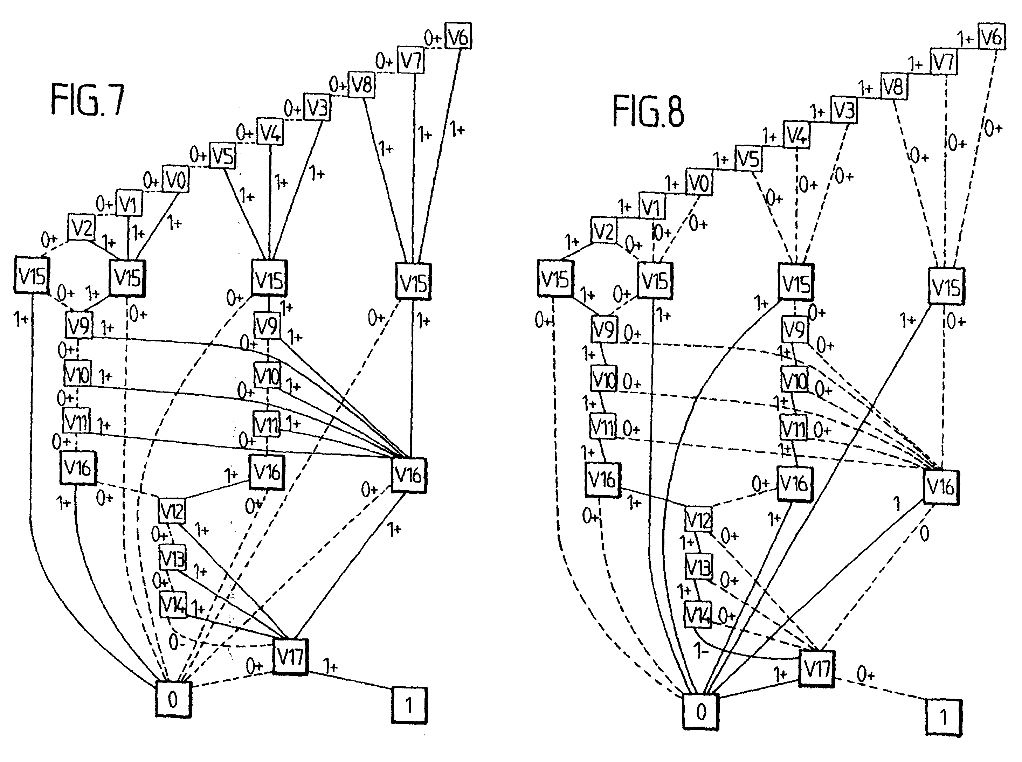

Les figures 7 et 8 représentent les DDB (avec branchements inverseurs) associés respectivement à une dilatation et à une érosion d'une image bidimensionnelle, avec trois pixels courants à traiter en une seule série de comparaisons. Les noeuds "0" et "1" correspondent respectivement à une hypothèse "fausse" et "vraie" formulée sur chaque bit du mot-résultat, et à inverser si le nombre de branchements inverseurs empruntés pendant la comparaison est impair. Ainsi, une partie au moins des noeuds du diagramme doit être parcourue jusqu'à aboutir au noeud terminal "1" (si les branchements inverseurs empruntés pendant le parcours de l'arborescence se comptent en nombre pair, au noeud terminal "0" sinon). A chaque arrivée au noeud "0" (en tenant compte de la parité précitée), l'arborescence doit être parcourue en sens inverse pour revenir au dernier bit estimé et lui attribuer une valeur-résultat, conjuguée. L'ensemble des valeurs de bits-résultats trouvées constitue alors un mot-résultat pour les trois pixels courants.

Dans le cas où aucune fonction booléenne simple ne peut décrire la fonction à traiter, on peut effectuer une décomposition de *f*. Cette décomposition peut se faire suivant la méthode de "force brute" [2]. Une telle décomposition ne fait intervenir que des fonctions booléennes simples de type "et" et "ou". Elle apparaît dans l'exemple décrit ci-après.

Le Demandeur a proposé une application de l'invention à la détection de points simples d'images bidimensionnelles (2D) et tridimensionnelles (3D). Un point simple est un point d'une image binaire qui peut changer d'attribut (1 ou 0) sans que la topologie de l'image soit substantiellement modifiée. Dans le cadre par exemple d'un traitement par amincissement, la détection des points simples permet en particulier d'amincir les formes sans les découper. Ainsi, avec les conventions utilisées ci-avant, si l'on effectue un traitement par amincissement (épaississement) avec détection préalable de points simples, l'attribut à "1" (à "0") d'un point est transformé en "0" (en "1"), si ce point est un point simple.

Dans le domaine des images 3D et plus particulièrement des images médicales, la détection de points simples suscite aujourd'hui un intérêt croissant. On cherche alors à obtenir des traitements les plus simples possibles.

La détection de points simples dans une image 2D par un traitement utilisant un DDB, est d'abord présenté. Le Demandeur a également proposé un traitement utilisant un DDB et permettant la détection de points simples dans une image 3D. Il sera décrit ultérieurement.

L'élaboration d'un ensemble de tests pour la détection de points simples doit d'abord passer par le choix d'un critère de connexité. En pratique, il s'agit de choisir une connexité pour les éléments à "1" et une autre pour les éléments à "0", le couple de connexités choisies devant répondre à certaines conditions, décrites notamment par :

[4] - "Digital topology : introduction and survey" (T.Y. Kong and A. Rosenfeld, *Computer vision, graphics and image processing,* **48,** 357-393, 1989)

Le critère de connexité choisi dans l'exemple, pour la recherche de points simples d'une image 2D, consiste à prendre quatre composantes connexes parmi celles qui occupent les positions cardinales Nord, Est, Sud et Ouest d'un voisinage à huit éléments premiers voisins de l'élément central courant X.

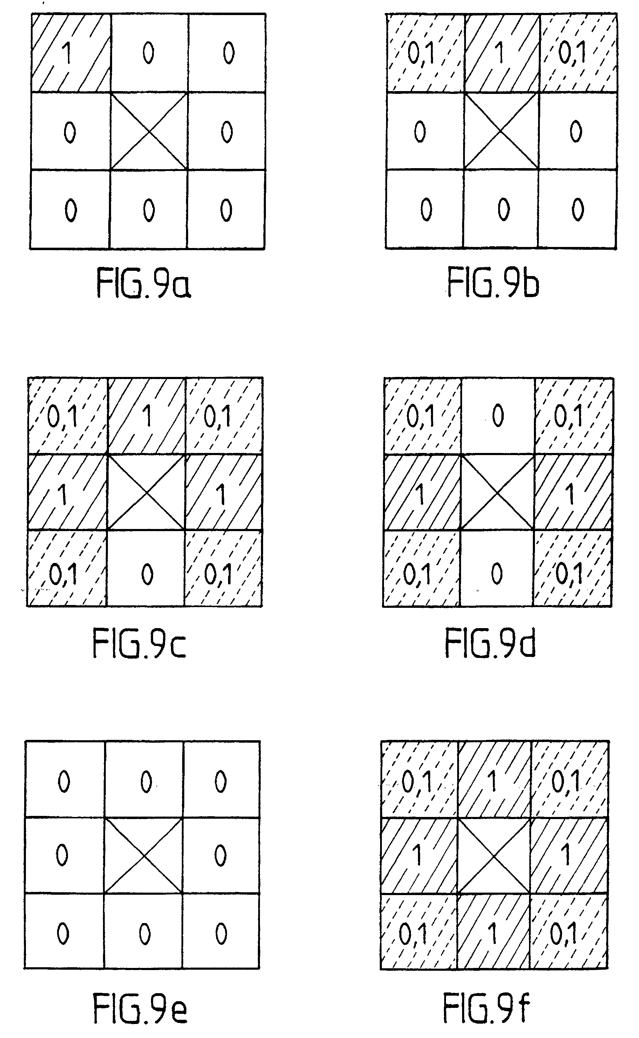

Les figures 9a, 9b et 9c représentent des situations dans lesquelles l'élément central est considéré comme un point simple en fonction des valeurs de bits des éléments du voisinage, tandis que les figures 9d, 9e et 9f représentent des situations dans lesquelles l'élément central n'est pas considéré comme un point simple, selon le critère de connexité précité. Les hachures en traits pointillés signifient que la valeur de bit de l'élément du voisinage peut être "0" ou "1", sans qu'elle puisse avoir une quelconque influence sur le résultat.

Il est à noter que, dans le cas de la détection de points simples, l'élément courant ne fait pas partie du voisinage tel que décrit précédemment. La comparaison des bits ne concerne donc pas l'élément courant. Par ailleurs, il sera vu plus loin que les noeuds terminaux "0" et "1" du DDB permettent de déterminer directement si le pixel courant est simple ou non, aucune hypothèse n'étant formulée à l'avance sur ce pixel.

En se référant aux figures 9a, 9b et 9c, l'élément central est un point simple :

- si l'un ou plusieurs des éléments du voisinage, voisins deux à deux par un côté ou un sommet, portent la valeur "1" dans l'exemple décrit, et
- si au moins l'un des éléments occupant une position cardinale parmi le Nord, l'Est, l'Ouest et le Sud porte la valeur "0".

Si ces conditions ne sont pas vérifiées, l'élément central n'est pas un point simple (figures 9d, 9e et 9f).

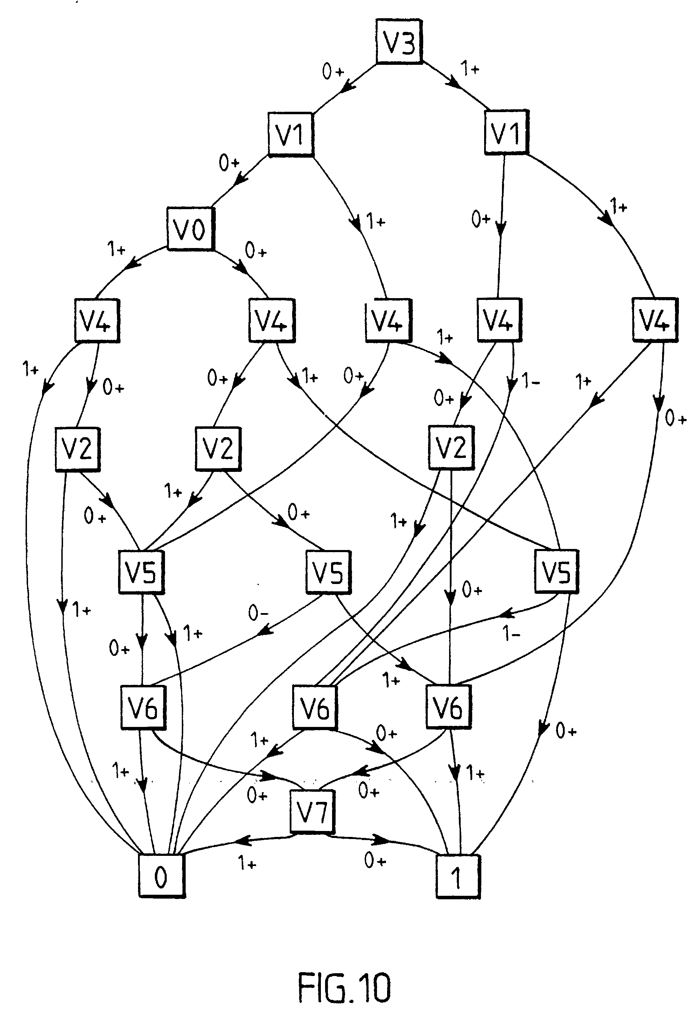

La figure 10 représente le DDB équivalent à l'arborescence que prévoit le traitement de détection de points simples d'une image 2D, selon l'invention. On vérifie tout d'abord que si l'on suit un parcours de l'arborescence entre le premier test de l'élément V3 jusqu'à l'un des noeuds terminaux "0" ou "1", chaque pixel du voisinage n'est examiné qu'une fois. On vérifie en outre qu'un seul parcours examine à la fois les huit pixels du voisinage (V0, ..., V7 = 0) : si les sept premiers éléments valent "0" (V0, ..., V6 = 0) , alors le huitième V7 est examiné.

Le diagramme de décision binaire débute par un premier test sur la valeur de V3 (Ouest). Compte tenu du critère de connexité choisi, le diagramme de décision binaire pourrait débuter par un autre pixel parmi V1, V4 ou V6 (Nord, Sud, Est). Ensuite, le pixel V1 (Nord) est testé. On remarque alors que :

- les tests concernent les bits d'au moins trois pixels occupant trois positions cardinales respectives parmi le Nord, l'Est, l'Ouest et le Sud, et ce, indépendamment des valeurs de bit des éléments du voisinage,
- les élément V0, V2, V7 et V5 ne sont testés que si un élément 4-connexe parmi V1, V4, V6 et V3, avec lequel il a un côté en commun, est à la valeur de bit "0".

Ainsi, ce traitement n'analyse :

- l'un des deux éléments au Nord-Est et Nord-Ouest que si l'élément au Nord a une valeur de bit égale à "0",
- l'un des deux éléments au Nord-Est et Sud-Est que si l'élément à l'Est a une valeur de bit égale à "0",
- l'un des deux éléments au Nord-Ouest et Sud-Ouest que si l'élément à l'Ouest a une valeur de bit égale à "0", et
- l'un des deux éléments au Sud-Est et Sud-Ouest que si l'élément au Sud a une valeur de bit égale à "0".

Chaque branche issue d'un test est associée à une valeur de bit "1" ou "0" de l'élément testé. Par ailleurs, les valeurs binaires indiquées sont suivies d'un signe + ou - suivant que les branches sont issues d'un bord complémentaire ou non. Ainsi, l'ensemble des branchements conditionnels comporte un sous-ensemble de branchements inverseurs marqués par un signe -.

Le traitement obtenu, correspondant au diagramme de décision binaire représenté sur la figure 10, est retranscrit en annexe I, sous forme de programme compilé en langage C. Il comporte dix-neuf lignes de test de type "if", correspondant aux dix-neuf noeuds de test du diagramme. Les noeuds terminaux du diagramme sont représentés par les instructions finales "return" qui apparaissent dans aux lignes L080 et L081. En outre, les branchements inverseurs apparaissent dans les lignes L896, L864 et L560, lesquelles portent alors l'instruction "R = !R".

Ensuite, le traitement utilise l'une des lignes L080 et L081, pour définir si l'élément central est simple ou non, suivant la valeur analysée de R.

On peut encore supprimer une partie des instructions "goto" en utilisant la structure en réseau du diagramme de décision binaire représenté sur la figure 10. L'annexe II retranscrit alors le traitement équivalent programmé en langage C. Les deux programmes sont équivalents. En particulier, on remarque, dans les deux cas, que la valeur de bit du point simple n'est pas attribuée de manière définitive dans les deux points d'arrêt, par exemple pour l'annexe I aux lignes L080 et L081.

Ainsi, la comparaison entre les pixels du voisinage s'achève en l'un de ces deux points d'arrêt, les états logiques R et !R étant conjugués. En particulier, tenant compte des branchements inverseurs,

- la valeur R (ou de !R) est maintenue à R (à !R) si les branchements inverseurs empruntés pendant le parcours de l'arborescence se comptent en nombre pair, et
- la valeur de R (ou de !R) est inversée à !R (à R) si les branchements inverseurs empruntés pendant le parcours de l'arborescence se comptent en nombre impair.

Dans l'exemple, si le parcours du DDB s'achève au noeud terminal "0" ("1") et que le nombre de branchements inverseurs empruntés est pair, le pixel courant n'est pas un point simple (est un point simple). En revanche, si le parcours du DDB s'achève au noeud terminal "0" ("1") et que le nombre de branchements inverseurs empruntés est impair, le pixel courant est un point simple (n'est pas un point simple).

Dans le cas d'un traitement par amincissement ou par épaississement avec recherche préalable de points simples, la valeur d'un pixel courant dépend :

- du noeud terminal en fin de parcours du BDD,
- de la valeur R ou !R de ce noeud terminal (point simple ou non), et
- de la valeur initiale de ce pixel courant (un point simple à "1" est transformé en "0" par amincissement ; un point simple à "0" est transformé en "1" par épaississement).

Dans les exemples de traitement de recherche de points simples retranscrits dans les annexes I et II, la valeur prédéterminée de R vaut "0".

Le nombre de tests est avantageusement réduit en utilisant le traitement s'appuyant sur un diagramme de décision binaire d'expression ainsi réduite. En effet, le traitement selon l'invention propose en moyenne 4,72 tests pour un pixel d'une image 2D, alors qu'un traitement classique, ne tenant pas compte de toutes les symétries du problème, peut proposer 7 tests en moyenne.

Ainsi, au sens de la présente invention, une expression réduite du diagramme de décision binaire vérifie tout ou partie des conditions suivantes :

- il existe des pixels qui ne sont pas systématiquement analysés : V0, V2, V5, V6 et V7,
- le traitement prévoit $2^N$ noeuds terminaux si le résultat est codé sur N bits,
- il existe des noeuds du diagramme en lesquels sont prévues plusieurs entrées : deux entrées en V7, deux ou trois entrées en V6 et en V5,
- le traitement comporte des branchements inverseurs, et
- les noeuds relatifs à des pixels tels que V0 et V7, n'apparaissent qu'une seule fois.

Les figures 11a et 11b représentent une vue de dessus et une vue de dessous d'un voisinage associé à un élément courant dans une image 3D. L'élément courant se situe au centre d'un parallélépipède, cubique dans l'exemple, que constitue l'ensemble des éléments du voisinage. Le voisinage comporte alors vingt-six éléments cubiques, scalants.

Pour une image tridimensionnelle échantillonnée en une multiplicité de voxels (ou pavés), le traitement compare les bits des vingt-six voxels, premiers voisins du voxel central courant. Six voxels occupent le centre des faces du cube dont le voxel courant est le centre. Huit éléments occupent les sommets et douze occupent les centres des arêtes.

Le voisinage est indexé de la manière suivante :

- sur une première face du pavé, les éléments sont indexés de V0 jusqu'à V8,
- sur la face opposée, les éléments sont indexés de V18 jusqu'à V25, et
- sur la tranche centrale, les éléments sont indexés de V9 jusqu'à V16, l'élément central courant n'étant pas indexé.

Ici, le critère de connexité pour la détection de points simples passe par le choix de six composantes 6-connexes, s'appuyant sur le formalisme décrit notamment par :

[5] - "A new characterisation of three-dimensional simple points" (G. Bertrand and G. Malandain, *Pattern recognition letters*, **15-2,** 169-175, 1994).

Le diagramme de décision binaire d'ordre réduit et de forme compacte avec des branchements inverseurs, comporte 503 noeuds. Le programme en langage C obtenu, correspondant à ce DDBOR est retranscrit en annexe III. Alors qu'un traitement classique connu par exemple de la référence :

[6]- "Boolean characterization of 3D simple points" (G. BERTRAND, *Pattern Recognition Letters*, **17,** 115-124, 1996)

comporte en moyenne 111 tests, le traitement utilisant un DDB selon l'invention comporte en moyenne 8,71 tests par élément sélectionné.

Le traitement analyse ici les valeurs de bit d'au moins cinq voxels occupant cinq positions parmi les six centres des faces, indépendamment des valeurs de bit des autres voxels du voisinage ; et n'analysent l'un des voxels d'une face que si le voxel occupant le centre a une valeur de bit égale à "0".

Le diagramme de décision binaire équivalent comporte à nouveau deux noeuds terminaux à partir desquels l'élément central peut être défini en tant que point simple ou non. Dans l'exemple, le pavé courant est un point simple si les pavés ayant des valeurs de bits de "1" sont voisins deux à deux par une face, par un côté ou par un sommet et qu'il en existe au moins un, et si les pavés ayant une valeur de bit de "0" et voisins du pavé central par une face sont reliés entre eux par l'intermédiaire d'éléments ayant une valeur de bit de "0" et voisins par une arête du pavé central et qu'il en existe au moins un.

En revanche, l'élément central n'est pas défini en tant que point simple si les éléments du voisinage ne satisfont pas ces conditions. On détecte ainsi les points simples d'une image 3D.

Par exemple, l'amincissement des images binaires consiste en l'effacement de points à "1" qui sont simples qui ne sont pas des points d'extrémité. Habituellement, les dispositifs de traitement sont conçus de telle manière que les deux tests (points simples et points d'extrémité) sont effectués l'un à la suite de l'autre. Par exemple, une condition d'effacement est décrite par la référence :

[7]- "A parallel thinning algorithm for medial surfaces" (G. BERTRAND, *Pattern Récognition Letters*, **16,** 979-986, 1995)

Cette condition repose sur une caractérisation booléenne décrite par la référence [6], à laquelle est ajoutée la condition suivante : "le point simple est-il un point d'extrémité ?"
Généralement, cette nouvelle contrainte fait croître le nombre de tests. Or, un diagramme de décision binaire qui remplit ces deux conditions à la fois ne prévoit que 272 noeuds, c'est-à-dire que le nombre de tests effectués est encore plus réduit que précédemment. Le traitement selon l'invention, programmé en langage C est retranscrit en annexe IV. Ainsi, le nombre de tests effectués en moyenne en utilisant un DDB selon l'invention et respectant les deux conditions précitées, est de 5,16. En revanche, ce nombre est de 114,1 si l'on applique le formalisme décrit dans la référence [7].
On peut encore citer à titre d'exemple une autre méthode qui consiste à parcourir l'image 3D dans les six directions Nord, Sud, Est, Ouest, Haut et Bas passant par les six centres des faces du pavé, en réalisant des itérations successives dans ces directions. Cette méthode est connue par la référence :

[8]- "A simple parallel 3-D thinning algorithm" (W.X. GONG et G. BERTRAND, *10th International Conference on Pattern Recognition*, Atlantic City, June 17-21, 1990)

Elle revient donc à respecter cinq conditions qui peuvent facilement être transcrites en termes d'expressions booléennes. Le diagramme de décision binaire simplifié effectue dans ce cas 3,27 tests en moyenne par élément examiné, alors que le formalisme utilisé dans la référence [8] prévoit en moyenne 4,83 tests.
Les programmes en langage C qui apparaissent dans les annexes I, II, III et IV ci-après sont compilés sous environnement UNIX. Typiquement, le temps de traitement par amincissement d'une image 3D, est voisin de 0,25µs par voxel, sur des unités centrales dotées de processeurs à 167 Mhz (SUN Ultral Sparc ou DEC Alpha 3000) (marques déposées).
Bien entendu, le langage informatique utilisé pour programmer les traitements peut être différent du langage C.
Avantageusement, le dispositif décrit ci-avant, comporte en zone mémoire les jeux d'instructions respectifs d'une pluralité de modules de calcul, adaptés chacun à un type de traitement parmi une érosion, une dilatation et un amincissement de traits et/ou de surfaces d'images 2D et/ou 3D, le système de gestion de l'image permettant à un utilisateur de choisir l'un de ces traitements. Chaque module de calcul est alors muni d'un jeu d'instructions optimisé par une technique de réduction d'arbre de décision binaire associé à la fonction de traitement choisie. Cette réduction peut se faire au moyen d'un traitement informatique, notamment connu par :

[9]- "Symbolic boolean manipulation with ordered binary decision diagrams" (R.E.Bryant, *Technical Report CMU-CS-92-160*, School of Computer Science, Carnagie Mellon University, June 1992)

L'invention n'est pas limitée à la forme de réalisation décrite précédemment à titre d'exemple, elle s'étend à d'autres variantes.
Ainsi, on comprendra que la séquence à traiter n'est pas forcément une image numérique. Le moyen de test selon l'invention peut également s'appliquer au traitement d'une séquence sonore représentée suivant une topologie en fréquence et en intensité.
Par ailleurs, le traitement décrit ci-avant peut s'appliquer également à une image unidimensionnelle. Dans ce cas, le voisinage choisi pour chaque élément courant peut s'étendre sur un ou deux segments de courbes.
Les traitements par amincissement, détection de points simples, érosion et dilatation sont décrits à titre d'exemple. L'invention peut s'appliquer, de façon générale, à une fonction de traitement quelconque, décomposée en opérations booléennes simples, notamment par la méthode de force brute.
Par ailleurs, les critères de connexité choisis pour la détection de points simples sont décrits ci-avant à titre d'exemple. Dans une variante, les critères choisis peuvent être différents.
La simplification du diagramme de décision binaire, selon le procédé de l'invention, peut être seulement partielle. Pour certaines applications, il pourra ainsi ne contenir aucun branchement inverseur (DDBOR), ou encore comprendre plus de deux noeuds terminaux.
En outre, les définitions des fonctions d'érosion et de dilatation peuvent être généralisées de la manière suivante : un bit-résultat de valeur prédéterminée est attribué à un élément courant si tous les éléments du voisinage ont des valeurs respectives de bits égales à cette valeur prédéterminée, et un bit-résultat de valeur conjuguée est

EP 0 967 573 B1

attribué sinon.

Enfin, le traitement par érosion et/ou par dilatation de trois éléments courants à la fois, d'une image 2D, est décrit ci-avant à titre d'exemple. De manière plus générale, le traitement selon l'invention peut être appliqué à un ou plusieurs éléments courants à la fois, d'une image 2D ou 3D.

ANNEXE I

Les lignes ci-dessous permettent, selon la valeur de STATIS-TICS_ :

- soit d'accéder à la valeur du point et d'incrémenter un compteur en vue de réaliser des statistiques,
- soit d'accéder uniquement à la valeur du point

```
/*------------------- statistics -------------------*/
#if defined(_STATISTICS_)
extern int TESTS_nb;
#define VAL(tab,index) ( ++TESTS_nb ? tab[index] : tab[index]
)
#else
#define VAL(tab,index) tab[index]
#endif
/*-------------------------------------------------*/
```

Cette procédure prend en entrée un tableau de 8 valeurs représentant le voisinage 2D du point (la valeur du point central importe peu). Le voisinage est numéroté comme suit

```
0 1 2
3 x 4
5 6 7
```

La procédure renvoie 1 si le point est simple (en 2D), 0 sinon. Un point 2D est simple si et seulement si, dans son voisinage:

- il existe une et une seule 4-composante connexe du fond 4-adjacente au point central
- il existe une et une seule 8-composante connexe de l'objet.

On utilise explicitement la 4-connexité pour le fond, points à 0, et donc la 8-connexité pour l'objet, points de valeur différente de 0.
Le principe est de compter les 4-composantes connexes du fond, qui sont 4-adjacentes au point central. Pour qu'une telle 4-composante connexe existe, il faut qu'un 4-voisin (1, 3, 4 ou 6) du point central appartienne au fond. Il faut également prendre garde à ne pas compter deux fois la même composante, donc vérifier que deux 4-voisins ne vont pas en fait appartenir a la même 4-composante.

```
int IsSimple2D( const int *V )
{

    int nb_cc = 0;
```

On teste si le point 1, 4-voisin du point central appartient au fond auquel cas sa valeur ( VAL(V,1)) est 0 (=faux), donc la négation de sa valeur ( !VAL(V,1) ) est vrai.
Si oui, on incrémente le nombre de composantes trouvées.
On vérifie ensuite que cette composante ne peut pas être comptée une seconde fois, par exemple avec la 4-composante définie par le 4-voisin 4. Pour que cela survienne, il faut qu'il existe un 4-chemin dans le fond entre 1 et 4, et donc que 2 et 4 appartiennent tous deux au fond. Si c'est le cas, on comptera cette composante lorsque l'on traitera le point 4, donc on décrémente le compteur.

```
if ( !VAL(V,1) ) {
 nb_cc ++;
 if ( !VAL(V,4) && !VAL(V,2) ) nb_cc --;
}


(* même principe pour les 3 autres 4-voisins: 4, 6 et 3 )
if ( !VAL(V,4) ) {
 nb_cc ++;
 if ( !VAL(V,6) && !VAL(V,7) ) nb_cc --;
}


if ( !VAL(V,6) ) {
 nb_cc ++;
 if ( !VAL(V,3) && !VAL(V,5) ) nb_cc --;
}
if ( !VAL(V,3) ) {
 nb_cc ++;
 if ( !VAL(V,1) && !VAL(V,0) ) nb_cc --;
}
```

En fait, il existe un cas où le nombre calculé, nb_cc, n'est pas égal au nombre de 4-composantes connexes du fond. Il s'agit du cas ou tous les points du voisinage appartiennent au fond : alors nb_cc = 0 (au lieu de 1). Cependant, dans ce cas le point n'est pas simple (il n'y a pas de 8-composante connexe de l'objet dans le voisinage). Donc cela convient bien puisqu'il est possible de répondre que le point n'est pas simple.

```
if ( nb_cc == 1 ) return( 1 );


return( 0 );


}
```

Le traitement obtenu se présente de la manière suivante :

```
int is_simple_2D_BDD_1 (const int *V) (
int R = 0;

L993 : if (VAL(V,3)) {goto L929;} else {goto L656;}
L929 : if (VAL(V,1)) {goto L641;} else {goto L896;}
L641 : if (VAL(V,4)) {goto L305;} else {goto L528;}
L305 : if (VAL(V,6)) {goto L081;} else {goto L080;}
L528 : if (VAL(V,6)) {goto L080;} else {goto L337;}
L337 : if (VAL(V,7)) {goto L081;} else {goto L080;}
L896 : if (VAL(V,4)) {R=(!R); goto L305;} else {goto L625;}
L625 : if (VAL(V,2)) {goto L081;} else {goto L528;}


L656 : if (VAL(V,1)) {goto L832;} else {goto L705;}
L832 : if (VAL(V,4)) {goto L864;} else {goto L545;}
L864 : if (VAL(V,5)) {R=(!R); goto L305;} else {goto L080;}
L545 : if (VAL(V,5)) {goto L081;} else {goto L849;}
L849 : if (VAL(V,6)) {goto L081;} else {goto L337;}
L705 : if (VAL(V,0)) {goto L961;} else {goto L352;}
L961 : if (VAL(V,4)) {goto L081;} else {goto L609;}
L609 : if (VAL(V,2)) {goto L081;} else {goto L545;}
L352 : if (VAL(V,4)) {goto L864;} else {goto L769;}
L769 : if (VAL(V,2)) {goto L545;} else {goto L560;}
L560 : if (VAL(V,5)) {goto L528;} else {R=(!R);goto L849;}
L080 : return !R;
L081 : return R;
```

ANNEXE II

Détection des points simples 2D - Traitement compilé

```
int is_simple_2D_BDD_2 (const int *V) {
int R = 0;
if ( V[3] )
    if ( V[1] )
        if ( V[4] )
            return ( V[6] ? R : !R ) ;
        else
            Lb10 : if ( V[6] )
              return ( !R ) ;
            else
              return ( V[7] ? R : !R ) ;
      else
          if ( V[4] )
             return ( V[6] ? !R : R ) ;
          else
             if ( V[2] )
               return (R ) ;
             else
               {goto Lb10;}
    else
      if ( V[1] )
          if ( V[4] )
             Lb11 : if ( V[5] )
                return ( V[6] ? R : !R ) ;
             else
                return ( !R ) ;
          else
             Lb12 : if ( V[5] )
                return ( R ) ;
             else
                Lb13 : if ( V[6] )
                   return ( R ) ;
                else
```

14

```
                    return ( V[7] ? R : !R ) ;
        else
          if ( V[0] )
             if ( V[4] )
               return ( R ) ;
             else
               if ( V[2] )
                  return ( R ) ;
               else
                  {goto Lb12;}
        else
          if ( V[4] )
             {goto Lb11;}
          else
           if ( V[2] )
             {goto Lb12;}
                 else
                   if ( V[5] )
                      {goto Lb10;}
                   else
                      {R = !R; goto Lb13;}

        }
```

ANNEXE III

```
/*------------------- statistics --------------------*/
#if defined(_STATISTICS_)
extern int TESTS_nb;
extern int TESTS_inv;
#define VAL(tab,index) ( ++TESTS_nb ? tab[index] : tab[index]
)
#define STATINV ( ++TESTS_inv , statInv=(!statInv) )
#else
#define VAL(tab,index) tab[index]
#define STATINV statInv=(!statInv)
#endif
/*------------------------------------------------------*/


int BDD_IsSimple3D( register const int *V )
{int statInv = 0;
L147001: if (VAL(V,12)) {goto L143033;} else {goto L120232;}
L143033: if (VAL(V,10)) {goto L123529;} else {goto L118136;}
L123529: if (VAL(V,4)) {goto L146041;} else {goto L144920;}
L146041: if (VAL(V,13)) {goto L124809;} else {goto L145112;}
L124809: if (VAL(V,15)) {goto L106441;} else {goto L124904;}
L106441: if (VAL(V,21)) {goto L105737;} else {goto L105736;}
L124904: if (VAL(V,21)) {goto L105736;} else {goto L106537;}
L106537: if (VAL(V,24)) {goto L105737;} else {goto L105736;}
L145112: if (VAL(V,15)) {goto L124648;} else {goto L108505;}
L124648: if (VAL(V,21)) {goto L105736;} else {goto L106473;}
L106473: if (VAL(V,22)) {goto L105737;} else {goto L105736;}
L108505: if (VAL(V,21)) {goto L106281;} else {goto L114329;}
L106281: if (VAL(V,16)) {goto L105737;} else {goto L105736;}
L114329: if (VAL(V,16)) {goto L128185;} else {goto L115769;}
L128185: if (VAL(V,22)) {goto L105737;} else {goto L106537;}
L115769: if (VAL(V,22)) {goto L106537;} else {goto L144408;}
L144408: if (VAL(V,24)) {goto L105736;} else {goto L106569;}
L106569: if (VAL(V,25)) {goto L105737;} else {goto L105736;}
L144920: if (VAL(V,13)) {goto L109080;} else {goto L116761;}
L109080: if (VAL(V,15)) {STATINV;goto L106441;} else {goto
L118697;}
L118697: if (VAL(V,7)) {goto L105737;} else {goto L124904;}
```

```
L116761: if (VAL(V,5)) {goto L117817;} else {goto L127624;}
L117817: if (VAL(V,15)) {goto L105737;} else {goto L117017;}
L117017: if (VAL(V,7)) {goto L105737;} else {goto L108505;}
L127624: if (VAL(V,15)) {goto L124648;} else {goto L114553;}
L114553: if (VAL(V,7)) {goto L108505;} else {goto L118680;}
L118680: if (VAL(V,21)) {goto L130584;} else {goto L130041;}
L130584: if (VAL(V,8)) {STATINV;goto L106281;} else {goto
L105736;}
L130041: if (VAL(V,8)) {goto L126505;} else {goto L137305;}
L126505: if (VAL(V,16)) {goto L127657;} else {goto L105737;}
L127657: if (VAL(V,22)) {goto L106537;} else {STATINV;goto
L106537;}
L137305: if (VAL(V,16)) {goto L127657;} else {goto L115769;}
L118136: if (VAL(V,4)) {goto L131608;} else {goto L137497;}
L131608: if (VAL(V,13)) {goto L115784;} else {goto L108185;}
L115784: if (VAL(V,15)) {goto L117608;} else {goto L121673;}
L117608: if (VAL(V,18)) {STATINV;goto L106441;} else {goto
L105736;}
L121673: if (VAL(V,18)) {goto L105737;} else {goto L134921;}
L134921: if (VAL(V,21)) {goto L105737;} else {goto L106537;}
L108185: if (VAL(V,15)) {goto L145497;} else {goto L120857;}
L145497: if (VAL(V,11)) {goto L146729;} else {goto L118584;}
L146729: if (VAL(V,18)) {goto L105737;} else {goto L130201;}
L130201: if (VAL(V,21)) {goto L105737;} else {goto L106473;}
L118584: if (VAL(V,18)) {goto L124648;} else {goto L120680;}
L120680: if (VAL(V,21)) {goto L105736;} else {goto L119432;}
L119432: if (VAL(V,19)) {STATINV;goto L106473;} else {goto
L105736;}
L120857: if (VAL(V,11)) {goto L129049;} else {goto L115481;}
L129049: if (VAL(V,18)) {goto L105737;} else {goto L120265;}
L120265: if (VAL(V,21)) {goto L105737;} else {goto L114329;}
L115481: if (VAL(V,18)) {goto L108505;} else {goto L126889;}
L126889: if (VAL(V,21)) {goto L106281;} else {goto L146681;}
L146681: if (VAL(V,16)) {goto L129465;} else {goto L121080;}
L129465: if (VAL(V,19)) {goto L109273;} else {goto L106537;}
L109273: if (VAL(V,22)) {goto L106537;} else {goto L105737;}
L121080: if (VAL(V,19)) {goto L121864;} else {goto L107128;}
L121864: if (VAL(V,22)) {STATINV;goto L106537;} else {goto
L105737;}
```

```
L107128: if (VAL(V,22)) {STATINV;goto L106537;} else {goto
L144408;}
L137497: if (VAL(V,1)) {goto L109625;} else {goto L144984;}
L109625: if (VAL(V,13)) {goto L116633;} else {goto L116569;}
L116633: if (VAL(V,15)) {goto L105737;} else {goto L107753;}
L107753: if (VAL(V,7)) {goto L105737;} else {goto L121673;}
L116569: if (VAL(V,5)) {goto L137753;} else {goto L126057;}
L137753: if (VAL(V,15)) {goto L105737;} else {goto L122249;}
L122249: if (VAL(V,7)) {goto L105737;} else {goto L120857;}
L126057: if (VAL(V,15)) {goto L145497;} else {goto L119273;}
L119273: if (VAL(V,7)) {goto L120857;} else {goto L107833;}
L107833: if (VAL(V,11)) {goto L135929;} else {goto L122824;}
L135929: if (VAL(V,18)) {goto L105737;} else {goto L107961;}
L107961: if (VAL(V,21)) {goto L105737;} else {goto L130041;}
L122824: if (VAL(V,18)) {goto L118680;} else {goto L121448;}
L121448: if (VAL(V,21)) {goto L130584;} else {goto L124136;}
L124136: if (VAL(V,8)) {goto L143960;} else {goto L125928;}
L143960: if (VAL(V,16)) {goto L146936;} else {goto L105737;}
L146936: if (VAL(V,19)) {goto L121864;} else {STATINV;goto
L106537;}
L125928: if (VAL(V,16)) {goto L146936;} else {goto L121080;}
L144984: if (VAL(V,13)) {goto L120456;} else {goto L128441;}
L120456: if (VAL(V,15)) {goto L117608;} else {goto L117657;}
L117657: if (VAL(V,7)) {goto L121673;} else {goto L127016;}
L127016: if (VAL(V,18)) {goto L124904;} else {STATINV;goto
L134921;}
L128441: if (VAL(V,5)) {goto L121577;} else {goto L114488;}
L121577: if (VAL(V,15)) {goto L145497;} else {goto L124089;}
L124089: if (VAL(V,7)) {goto L120857;} else {goto L129337;}
L129337: if (VAL(V,11)) {goto L130169;} else {goto L135480;}
L130169: if (VAL(V,18)) {goto L108505;} else {goto L107225;}
L107225: if (VAL(V,21)) {goto L106281;} else {goto L126025;}
L126025: if (VAL(V,16)) {goto L123049;} else {goto L121864;}
L123049: if (VAL(V,22)) {goto L105737;} else {STATINV;goto
L106537;}
L135480: if (VAL(V,18)) {goto L130904;} else {goto L146968;}
L130904: if (VAL(V,21)) {STATINV;goto L106281;} else {goto
L126505;}
```

```
L146968: if (VAL(V,21)) {STATINV;goto L106281;} else {goto
L143960;}
L114488: if (VAL(V,15)) {goto L146616;} else {goto L129881;}
L146616: if (VAL(V,11)) {goto L134312;} else {goto L136217;}
L134312: if (VAL(V,18)) {goto L124648;} else {STATINV;goto
L130201;}
L136217: if (VAL(V,2)) {goto L105737;} else {goto L118584;}
L129881: if (VAL(V,7)) {goto L133913;} else {goto L125960;}
L133913: if (VAL(V,11)) {goto L108953;} else {goto L122217;}
L108953: if (VAL(V,18)) {goto L108505;} else {goto L136281;}
L136281: if (VAL(V,21)) {goto L106281;} else {goto L143177;}
L143177: if (VAL(V,16)) {goto L109273;} else {goto L121864;}
L122217: if (VAL(V,2)) {goto L105737;} else {goto L115481;}
L125960: if (VAL(V,11)) {goto L134536;} else {goto L134697;}
L134536: if (VAL(V,18)) {goto L118680;} else {goto L135096;}
L135096: if (VAL(V,21)) {goto L130584;} else {goto L137704;}
L137704: if (VAL(V,8)) {goto L143128;} else {goto L121864;}
L143128: if (VAL(V,16)) {goto L121864;} else {goto L105737;}
L134697: if (VAL(V,2)) {goto L105737;} else {goto L122824;}
L120232: if (VAL(V,10)) {goto L126936;} else {goto L126121;}
L126936: if (VAL(V,4)) {goto L123272;} else {goto L132825;}
L123272: if (VAL(V,13)) {goto L123848;} else {goto L131161;}
L123848: if (VAL(V,15)) {goto L114968;} else {goto L119785;}
L114968: if (VAL(V,20)) {STATINV;goto L106441;} else {goto
L105736;}
L119785: if (VAL(V,14)) {goto L135721;} else {goto L128600;}
L135721: if (VAL(V,20)) {goto L105737;} else {goto L134921;}
L128600: if (VAL(V,20)) {goto L124904;} else {goto L135352;}
L135352: if (VAL(V,21)) {goto L105736;} else {goto L136472;}
L136472: if (VAL(V,23)) {STATINV;goto L106537;} else {goto
L105736;}
L131161: if (VAL(V,15)) {goto L113913;} else {goto L145833;}
L113913: if (VAL(V,20)) {goto L105737;} else {goto L130201;}
L145833: if (VAL(V,14)) {goto L132249;} else {goto L142617;}
L132249: if (VAL(V,20)) {goto L105737;} else {goto L120265;}
L142617: if (VAL(V,20)) {goto L108505;} else {goto L137769;}
L137769: if (VAL(V,21)) {goto L106281;} else {goto L125321;}
L125321: if (VAL(V,16)) {goto L142841;} else {goto L129368;}
L142841: if (VAL(V,22)) {goto L105737;} else {goto L136472;}
```

```
L129368: if (VAL(V,22)) {goto L136472;} else {goto L106809;}
L106809: if (VAL(V,23)) {goto L105737;} else {goto L130457;}
L130457: if (VAL(V,24)) {goto L105737;} else {goto L106569;}
L132825: if (VAL(V,3)) {goto L136121;} else {goto L123080;}
L136121: if (VAL(V,13)) {goto L123785;} else {goto L132537;}
L123785: if (VAL(V,15)) {goto L105737;} else {goto L108697;}
L108697: if (VAL(V,7)) {goto L105737;} else {goto L119785;}
L132537: if (VAL(V,5)) {goto L138169;} else {goto L142761;}
L138169: if (VAL(V,15)) {goto L105737;} else {goto L116793;}
L116793: if (VAL(V,7)) {goto L105737;} else {goto L145833;}
L142761: if (VAL(V,15)) {goto L113913;} else {goto L135737;}
L135737: if (VAL(V,7)) {goto L145833;} else {goto L131481;}
L131481: if (VAL(V,14)) {goto L123753;} else {goto L107608;}
L123753: if (VAL(V,20)) {goto L105737;} else {goto L107961;}
L107608: if (VAL(V,20)) {goto L118680;} else {goto L109400;}
L109400: if (VAL(V,21)) {goto L130584;} else {goto L128504;}
L128504: if (VAL(V,8)) {goto L135224;} else {goto L124712;}
L135224: if (VAL(V,16)) {goto L144696;} else {goto L105737;}
L144696: if (VAL(V,22)) {goto L136472;} else {goto L105737;}
L124712: if (VAL(V,16)) {goto L144696;} else {goto L129368;}
L123080: if (VAL(V,13)) {goto L107192;} else {goto L114137;}
L107192: if (VAL(V,15)) {goto L114968;} else {goto L130521;}
L130521: if (VAL(V,7)) {goto L119785;} else {goto L133768;}
L133768: if (VAL(V,14)) {goto L136760;} else {goto L127209;}
L136760: if (VAL(V,20)) {goto L124904;} else {STATINV;goto
L134921;}
L127209: if (VAL(V,6)) {goto L105737;} else {goto L128600;}
L114137: if (VAL(V,5)) {goto L107801;} else {goto L132280;}
L107801: if (VAL(V,15)) {goto L113913;} else {goto L143225;}
L143225: if (VAL(V,7)) {goto L145833;} else {goto L136249;}
L136249: if (VAL(V,14)) {goto L132345;} else {goto L130361;}
L132345: if (VAL(V,20)) {goto L108505;} else {goto L107225;}
L130361: if (VAL(V,6)) {goto L105737;} else {goto L142617;}
L132280: if (VAL(V,15)) {goto L114008;} else {goto L106649;}
L114008: if (VAL(V,20)) {goto L124648;} else {STATINV;goto
L130201;}
L106649: if (VAL(V,7)) {goto L137465;} else {goto L121512;}
L137465: if (VAL(V,14)) {goto L130329;} else {goto L144904;}
L130329: if (VAL(V,20)) {goto L108505;} else {goto L136281;}
```

21

```
L144904: if (VAL(V,20)) {goto L130904;} else {goto L132040;}
L132040: if (VAL(V,21)) {STATINV;goto L106281;} else {goto
L135224;}
L121512: if (VAL(V,14)) {goto L134152;} else {goto L117401;}
L134152: if (VAL(V,20)) {goto L118680;} else {goto L135096;}
L117401: if (VAL(V,6)) {goto L105737;} else {goto L107608;}
L126121: if (VAL(V,4)) {goto L123817;} else {goto L145849;}
L123817: if (VAL(V,9)) {goto L123465;} else {goto L119336;}
L123465: if (VAL(V,13)) {goto L122809;} else {goto L117305;}
L122809: if (VAL(V,15)) {goto L118169;} else {goto L107769;}
L118169: if (VAL(V,18)) {goto L105737;} else {goto L123337;}
L123337: if (VAL(V,20)) {goto L105737;} else {goto L106441;}
L107769: if (VAL(V,18)) {goto L105737;} else {goto L125993;}
L125993: if (VAL(V,14)) {goto L135721;} else {goto L145145;}
L145145: if (VAL(V,20)) {goto L134921;} else {goto L114105;}
L114105: if (VAL(V,21)) {goto L105737;} else {goto L136472;}
L117305: if (VAL(V,15)) {goto L143769;} else {goto L146873;}
L143769: if (VAL(V,11)) {goto L125865;} else {goto L132665;}
L125865: if (VAL(V,18)) {goto L105737;} else {goto L113913;}
L132665: if (VAL(V,18)) {goto L113913;} else {goto L128825;}
L128825: if (VAL(V,20)) {goto L105737;} else {goto L135865;}
L135865: if (VAL(V,21)) {goto L105737;} else {goto L119432;}
L146873: if (VAL(V,11)) {goto L146297;} else {goto L146233;}
L146297: if (VAL(V,18)) {goto L105737;} else {goto L117241;}
L117241: if (VAL(V,14)) {goto L132249;} else {goto L106585;}
L106585: if (VAL(V,20)) {goto L120265;} else {goto L126537;}
L126537: if (VAL(V,21)) {goto L105737;} else {goto L125321;}
L146233: if (VAL(V,18)) {goto L145833;} else {goto L125417;}
L125417: if (VAL(V,14)) {goto L134009;} else {goto L125369;}
L134009: if (VAL(V,20)) {goto L105737;} else {goto L145977;}
L145977: if (VAL(V,21)) {goto L105737;} else {goto L146681;}
L125369: if (VAL(V,20)) {goto L126889;} else {goto L136233;}
L136233: if (VAL(V,21)) {goto L106281;} else {goto L136440;}
L136440: if (VAL(V,16)) {goto L136056;} else {goto L108601;}
L136056: if (VAL(V,19)) {goto L144696;} else {goto L136472;}
L108601: if (VAL(V,19)) {goto L105737;} else {goto L118617;}
L118617: if (VAL(V,22)) {goto L105737;} else {goto L106809;}
L119336: if (VAL(V,13)) {goto L134824;} else {goto L124105;}
L134824: if (VAL(V,15)) {goto L115992;} else {goto L128377;}
```

```
L115992: if (VAL(V,18)) {goto L114968;} else {goto L146072;}
L146072: if (VAL(V,17)) {STATINV;goto L123337;} else {goto
L105736;}
L128377: if (VAL(V,18)) {goto L119785;} else {goto L130729;}
L130729: if (VAL(V,14)) {goto L122041;} else {goto L108056;}
L122041: if (VAL(V,17)) {goto L107273;} else {goto L134921;}
L107273: if (VAL(V,20)) {goto L134921;} else {goto L105737;}
L108056: if (VAL(V,17)) {goto L134568;} else {goto L134440;}
L134568: if (VAL(V,20)) {STATINV;goto L134921;} else {STATINV-
;goto L106441;}
L134440: if (VAL(V,20)) {STATINV;goto L134921;} else {goto
L135352;}
L124105: if (VAL(V,15)) {goto L136841;} else {goto L108153;}
L136841: if (VAL(V,11)) {goto L143209;} else {goto L120488;}
L143209: if (VAL(V,18)) {goto L113913;} else {goto L143161;}
L143161: if (VAL(V,17)) {goto L123017;} else {goto L130201;}
L123017: if (VAL(V,20)) {goto L130201;} else {goto L105737;}
L120488: if (VAL(V,18)) {goto L114008;} else {goto L143832;}
L143832: if (VAL(V,17)) {goto L123496;} else {goto L120680;}
L123496: if (VAL(V,20)) {goto L120680;} else {STATINV;goto
L106441;}
L108153: if (VAL(V,11)) {goto L136825;} else {goto L120873;}
L136825: if (VAL(V,18)) {goto L145833;} else {goto L121833;}
L121833: if (VAL(V,14)) {goto L108441;} else {goto L131321;}
L108441: if (VAL(V,17)) {goto L126729;} else {goto L120265;}
L126729: if (VAL(V,20)) {goto L120265;} else {goto L105737;}
L131321: if (VAL(V,17)) {goto L145177;} else {goto L129945;}
L145177: if (VAL(V,20)) {goto L107225;} else {goto L107065;}
L107065: if (VAL(V,21)) {goto L106281;} else {goto L105737;}
L129945: if (VAL(V,20)) {goto L107225;} else {goto L137769;}
L120873: if (VAL(V,18)) {goto L137465;} else {goto L109305;}
L109305: if (VAL(V,14)) {goto L121257;} else {goto L135992;}
L121257: if (VAL(V,17)) {goto L114393;} else {goto L126889;}
L114393: if (VAL(V,20)) {goto L126889;} else {goto L107065;}
L135992: if (VAL(V,17)) {goto L108376;} else {goto L146136;}
L108376: if (VAL(V,20)) {goto L146968;} else {goto L143384;}
L143384: if (VAL(V,21)) {STATINV;goto L106281;} else {goto
L105737;}
L146136: if (VAL(V,20)) {goto L146968;} else {goto L106968;}
```

```
L106968: if (VAL(V,21)) {STATINV;goto L106281;} else {goto
L136440;}
L145849: if (VAL(V,3)) {goto L136025;} else {goto L131385;}
L136025: if (VAL(V,1)) {goto L128953;} else {goto L144505;}
L128953: if (VAL(V,9)) {goto L136921;} else {goto L115561;}
L136921: if (VAL(V,13)) {goto L115705;} else {goto L124425;}
L115705: if (VAL(V,15)) {goto L105737;} else {goto L116729;}
L116729: if (VAL(V,7)) {goto L105737;} else {goto L107769;}
L124425: if (VAL(V,5)) {goto L114617;} else {goto L133241;}
L114617: if (VAL(V,15)) {goto L105737;} else {goto L116825;}
L116825: if (VAL(V,7)) {goto L105737;} else {goto L146873;}
L133241: if (VAL(V,15)) {goto L143769;} else {goto L123241;}
L123241: if (VAL(V,7)) {goto L146873;} else {goto L125481;}
L125481: if (VAL(V,11)) {goto L137737;} else {goto L123433;}
L137737: if (VAL(V,18)) {goto L105737;} else {goto L108409;}
L108409: if (VAL(V,14)) {goto L123753;} else {goto L135769;}
L135769: if (VAL(V,20)) {goto L107961;} else {goto L134025;}
L134025: if (VAL(V,21)) {goto L105737;} else {goto L128504;}
L123433: if (VAL(V,18)) {goto L131481;} else {goto L114905;}
L114905: if (VAL(V,14)) {goto L131865;} else {goto L108632;}
L131865: if (VAL(V,20)) {goto L105737;} else {goto L129849;}
L129849: if (VAL(V,21)) {goto L105737;} else {goto L124136;}
L108632: if (VAL(V,20)) {goto L121448;} else {goto L109112;}
L109112: if (VAL(V,21)) {goto L130584;} else {goto L116281;}
L116281: if (VAL(V,8)) {goto L105737;} else {goto L135193;}
L135193: if (VAL(V,16)) {goto L105737;} else {goto L108601;}
L115561: if (VAL(V,13)) {goto L127913;} else {goto L134873;}
L127913: if (VAL(V,15)) {goto L105737;} else {goto L145689;}
L145689: if (VAL(V,7)) {goto L105737;} else {goto L128377;}
L134873: if (VAL(V,5)) {goto L115353;} else {goto L116217;}
L115353: if (VAL(V,15)) {goto L105737;} else {goto L131193;}
L131193: if (VAL(V,7)) {goto L105737;} else {goto L108153;}
L116217: if (VAL(V,15)) {goto L136841;} else {goto L137209;}
L137209: if (VAL(V,7)) {goto L108153;} else {goto L107865;}
L107865: if (VAL(V,11)) {goto L142969;} else {goto L124232;}
L142969: if (VAL(V,18)) {goto L131481;} else {goto L129193;}
L129193: if (VAL(V,14)) {goto L146201;} else {goto L106616;}
L146201: if (VAL(V,17)) {goto L132297;} else {goto L107961;}
L132297: if (VAL(V,20)) {goto L107961;} else {goto L105737;}
```

```
L106616: if (VAL(V,17)) {goto L134280;} else {goto L121336;}
L134280: if (VAL(V,20)) {goto L135096;} else {goto L124616;}
L124616: if (VAL(V,21)) {goto L130584;} else {goto L105737;}
L121336: if (VAL(V,20)) {goto L135096;} else {goto L109400;}
L124232: if (VAL(V,18)) {goto L143576;} else {goto L145816;}
L143576: if (VAL(V,14)) {goto L134152;} else {goto L105737;}
L145816: if (VAL(V,14)) {goto L145656;} else {goto L145577;}
L145656: if (VAL(V,17)) {goto L134408;} else {goto L121448;}
L134408: if (VAL(V,20)) {goto L121448;} else {goto L124616;}
L145577: if (VAL(V,17)) {goto L105737;} else {goto L122153;}
L122153: if (VAL(V,20)) {goto L105737;} else {goto L119721;}
L119721: if (VAL(V,21)) {goto L105737;} else {goto L116281;}
L144505: if (VAL(V,9)) {goto L127689;} else {goto L117912;}
L127689: if (VAL(V,13)) {goto L129081;} else {goto L142873;}
L129081: if (VAL(V,15)) {goto L118169;} else {goto L120937;}
L120937: if (VAL(V,7)) {goto L107769;} else {goto L122745;}
L122745: if (VAL(V,18)) {goto L119785;} else {goto L108665;}
L108665: if (VAL(V,14)) {goto L131129;} else {goto L134568;}
L131129: if (VAL(V,20)) {goto L105737;} else {STATINV;goto
L124904;}
L142873: if (VAL(V,5)) {goto L125065;} else {goto L137977;}
L125065: if (VAL(V,15)) {goto L143769;} else {goto L106873;}
L106873: if (VAL(V,7)) {goto L146873;} else {goto L122889;}
L122889: if (VAL(V,11)) {goto L120137;} else {goto L116921;}
L120137: if (VAL(V,18)) {goto L145833;} else {goto L120121;}
L120121: if (VAL(V,14)) {goto L128009;} else {goto L145177;}
L128009: if (VAL(V,20)) {goto L105737;} else {goto L114057;}
L114057: if (VAL(V,21)) {goto L105737;} else {goto L126025;}
L116921: if (VAL(V,18)) {goto L136537;} else {goto L109465;}
L136537: if (VAL(V,14)) {goto L121129;} else {goto L144904;}
L121129: if (VAL(V,20)) {goto L105737;} else {goto L127305;}
L127305: if (VAL(V,21)) {goto L105737;} else {goto L126505;}
L109465: if (VAL(V,14)) {goto L126089;} else {goto L108376;}
L126089: if (VAL(V,20)) {goto L105737;} else {goto L128137;}
L128137: if (VAL(V,21)) {goto L105737;} else {goto L143960;}
L137977: if (VAL(V,15)) {goto L137369;} else {goto L131033;}
L137369: if (VAL(V,11)) {goto L121961;} else {goto L120809;}
L121961: if (VAL(V,18)) {goto L113913;} else {goto L108281;}
```

```
L108281: if (VAL(V,20)) {goto L105737;} else {STATINV;goto
L124648;}
L120809: if (VAL(V,2)) {goto L105737;} else {goto L132665;}
L131033: if (VAL(V,7)) {goto L115257;} else {goto L131833;}
L115257: if (VAL(V,11)) {goto L143801;} else {goto L117273;}
L143801: if (VAL(V,18)) {goto L145833;} else {goto L118777;}
L118777: if (VAL(V,14)) {goto L144089;} else {goto L144841;}
L144089: if (VAL(V,20)) {goto L105737;} else {goto L121353;}
L121353: if (VAL(V,21)) {goto L105737;} else {goto L143177;}
L144841: if (VAL(V,20)) {goto L136281;} else {goto L135801;}
L135801: if (VAL(V,21)) {goto L106281;} else {goto L135224;}
L117273: if (VAL(V,2)) {goto L105737;} else {goto L146233;}
L131833: if (VAL(V,11)) {goto L122505;} else {goto L119593;}
L122505: if (VAL(V,18)) {goto L131481;} else {goto L123721;}
L123721: if (VAL(V,14)) {goto L133721;} else {goto L134280;}
L133721: if (VAL(V,20)) {goto L105737;} else {goto L133561;}
L133561: if (VAL(V,21)) {goto L105737;} else {goto L137704;}
L119593: if (VAL(V,2)) {goto L105737;} else {goto L123433;}
L117912: if (VAL(V,13)) {goto L137048;} else {goto L136601;}
L137048: if (VAL(V,15)) {goto L115992;} else {goto L119881;}
L119881: if (VAL(V,7)) {goto L128377;} else {goto L137912;}
L137912: if (VAL(V,18)) {goto L119944;} else {goto L127336;}
L119944: if (VAL(V,14)) {goto L136760;} else {goto L105737;}
L127336: if (VAL(V,14)) {goto L115576;} else {goto L105737;}
L115576: if (VAL(V,17)) {goto L134568;} else {STATINV;goto
L134921;}
L136601: if (VAL(V,5)) {goto L128025;} else {goto L129304;}
L128025: if (VAL(V,15)) {goto L136841;} else {goto L120985;}
L120985: if (VAL(V,7)) {goto L108153;} else {goto L120041;}
L120041: if (VAL(V,11)) {goto L118553;} else {goto L120712;}
L118553: if (VAL(V,18)) {goto L118905;} else {goto L119177;}
L118905: if (VAL(V,14)) {goto L132345;} else {goto L105737;}
L119177: if (VAL(V,14)) {goto L126249;} else {goto L105737;}
L126249: if (VAL(V,17)) {goto L145177;} else {goto L107225;}
L120712: if (VAL(V,18)) {goto L124200;} else {goto L127848;}
L124200: if (VAL(V,14)) {goto L107672;} else {goto L105737;}
L107672: if (VAL(V,20)) {goto L130904;} else {goto L144024;}
L144024: if (VAL(V,21)) {STATINV;goto L106281;} else {goto
L143128;}
```

```
L127848: if (VAL(V,14)) {goto L146920;} else {goto L105737;}
L146920: if (VAL(V,17)) {goto L108376;} else {goto L146968;}
L129304: if (VAL(V,15)) {goto L125560;} else {goto L132601;}
L125560: if (VAL(V,11)) {goto L125576;} else {goto L121769;}
L125576: if (VAL(V,18)) {goto L114008;} else {goto L124008;}
L124008: if (VAL(V,17)) {goto L115496;} else {STATINV;goto
L130201;}
L115496: if (VAL(V,20)) {STATINV;goto L130201;} else {STATINV-
;goto L106441;}
L121769: if (VAL(V,2)) {goto L105737;} else {goto L120488;}
L132601: if (VAL(V,7)) {goto L106681;} else {goto L133080;}
L106681: if (VAL(V,11)) {goto L144729;} else {goto L109209;}
L144729: if (VAL(V,18)) {goto L137465;} else {goto L108985;}
L108985: if (VAL(V,14)) {goto L123113;} else {goto L144568;}
L123113: if (VAL(V,17)) {goto L133785;} else {goto L136281;}
L133785: if (VAL(V,20)) {goto L136281;} else {goto L107065;}
L144568: if (VAL(V,17)) {goto L137272;} else {goto L138440;}
L137272: if (VAL(V,20)) {goto L144024;} else {goto L143384;}
L138440: if (VAL(V,20)) {goto L144024;} else {goto L132040;}
L109209: if (VAL(V,2)) {goto L105737;} else {goto L120873;}
L133080: if (VAL(V,11)) {goto L114632;} else {goto L126409;}
L114632: if (VAL(V,18)) {goto L143576;} else {goto L143896;}
L143896: if (VAL(V,14)) {goto L131112;} else {goto L105737;}
L131112: if (VAL(V,17)) {goto L134280;} else {goto L135096;}
L126409: if (VAL(V,2)) {goto L105737;} else {goto L124232;}
L131385: if (VAL(V,1)) {goto L128985;} else {goto L132920;}
L128985: if (VAL(V,9)) {goto L115833;} else {goto L143816;}
L115833: if (VAL(V,13)) {goto L120841;} else {goto L138329;}
L120841: if (VAL(V,15)) {goto L118169;} else {goto L143481;}
L143481: if (VAL(V,7)) {goto L107769;} else {goto L121801;}
L121801: if (VAL(V,18)) {goto L105737;} else {goto L118809;}
L118809: if (VAL(V,14)) {goto L121609;} else {goto L116665;}
L121609: if (VAL(V,20)) {goto L134921;} else {STATINV;goto
L124904;}
L116665: if (VAL(V,6)) {goto L105737;} else {goto L145145;}
L138329: if (VAL(V,5)) {goto L125225;} else {goto L124553;}
L125225: if (VAL(V,15)) {goto L143769;} else {goto L117721;}
L117721: if (VAL(V,7)) {goto L146873;} else {goto L127081;}
L127081: if (VAL(V,11)) {goto L120905;} else {goto L130009;}
```

27

```
L120905: if (VAL(V,18)) {goto L105737;} else {goto L126265;}
L126265: if (VAL(V,14)) {goto L136137;} else {goto L107321;}
L136137: if (VAL(V,20)) {goto L120265;} else {goto L114057;}
L107321: if (VAL(V,6)) {goto L105737;} else {goto L106585;}
L130009: if (VAL(V,18)) {goto L136249;} else {goto L124745;}
L124745: if (VAL(V,14)) {goto L115609;} else {goto L115385;}
L115609: if (VAL(V,20)) {goto L126889;} else {goto L109561;}
L109561: if (VAL(V,21)) {goto L106281;} else {goto L143960;}
L115385: if (VAL(V,6)) {goto L105737;} else {goto L125369;}
L124553: if (VAL(V,15)) {goto L143417;} else {goto L129209;}
L143417: if (VAL(V,11)) {goto L138297;} else {goto L130712;}
L138297: if (VAL(V,18)) {goto L105737;} else {goto L126857;}
L126857: if (VAL(V,20)) {goto L130201;} else {STATINV;goto
L124648;}
L130712: if (VAL(V,18)) {goto L114008;} else {goto L123496;}
L129209: if (VAL(V,7)) {goto L144537;} else {goto L132217;}
L144537: if (VAL(V,11)) {goto L117785;} else {goto L137625;}
L117785: if (VAL(V,18)) {goto L105737;} else {goto L108521;}
L108521: if (VAL(V,14)) {goto L125513;} else {goto L119001;}
L125513: if (VAL(V,20)) {goto L120265;} else {goto L121353;}
L119001: if (VAL(V,20)) {goto L127305;} else {goto L119737;}
L119737: if (VAL(V,21)) {goto L105737;} else {goto L135224;}
L137625: if (VAL(V,18)) {goto L137465;} else {goto L143353;}
L143353: if (VAL(V,14)) {goto L114393;} else {goto L108376;}
L132217: if (VAL(V,11)) {goto L137113;} else {goto L145208;}
L137113: if (VAL(V,18)) {goto L105737;} else {goto L119849;}
L119849: if (VAL(V,14)) {goto L132761;} else {goto L138025;}
L132761: if (VAL(V,20)) {goto L107961;} else {goto L133561;}
L138025: if (VAL(V,6)) {goto L105737;} else {goto L135769;}
L145208: if (VAL(V,18)) {goto L121512;} else {goto L138040;}
L138040: if (VAL(V,14)) {goto L134408;} else {goto L133017;}
L133017: if (VAL(V,6)) {goto L105737;} else {goto L108632;}
L143816: if (VAL(V,13)) {goto L137176;} else {goto L127721;}
L137176: if (VAL(V,15)) {goto L115992;} else {goto L146009;}
L146009: if (VAL(V,7)) {goto L128377;} else {goto L130120;}
L130120: if (VAL(V,18)) {goto L133768;} else {goto L120296;}
L120296: if (VAL(V,14)) {goto L115576;} else {goto L126153;}
L126153: if (VAL(V,6)) {goto L105737;} else {goto L108056;}
L127721: if (VAL(V,5)) {goto L125161;} else {goto L118664;}
```

```
L125161: if (VAL(V,15)) {goto L136841;} else {goto L144249;}
L144249: if (VAL(V,7)) {goto L108153;} else {goto L126713;}
L126713: if (VAL(V,11)) {goto L123305;} else {goto L143192;}
L123305: if (VAL(V,18)) {goto L136249;} else {goto L137657;}
L137657: if (VAL(V,14)) {goto L126249;} else {goto L146377;}
L146377: if (VAL(V,6)) {goto L105737;} else {goto L131321;}
L143192: if (VAL(V,18)) {goto L116184;} else {goto L125128;}
L116184: if (VAL(V,14)) {goto L107672;} else {goto L137433;}
L137433: if (VAL(V,6)) {goto L105737;} else {goto L144904;}
L125128: if (VAL(V,14)) {goto L146920;} else {goto L134137;}
L134137: if (VAL(V,6)) {goto L105737;} else {goto L135992;}
L118664: if (VAL(V,15)) {goto L109432;} else {goto L109033;}
L109432: if (VAL(V,11)) {goto L125576;} else {goto L105737;}
L109033: if (VAL(V,7)) {goto L134217;} else {goto L122120;}
L134217: if (VAL(V,11)) {goto L144729;} else {goto L105737;}
L122120: if (VAL(V,11)) {goto L115672;} else {goto L145433;}
L115672: if (VAL(V,18)) {goto L121512;} else {goto L136664;}
L136664: if (VAL(V,14)) {goto L131112;} else {goto L143321;}
L143321: if (VAL(V,6)) {goto L105737;} else {goto L106616;}
L145433: if (VAL(V,18)) {goto L105737;} else {goto L114873;}
L114873: if (VAL(V,14)) {goto L105737;} else {goto L126377;}
L126377: if (VAL(V,6)) {goto L105737;} else {goto L145577;}
L132920: if (VAL(V,9)) {goto L118488;} else {goto L115001;}
L118488: if (VAL(V,13)) {goto L133976;} else {goto L118537;}
L133976: if (VAL(V,15)) {goto L107704;} else {goto L115161;}
L107704: if (VAL(V,18)) {goto L114968;} else {STATINV;goto
L123337;}
L115161: if (VAL(V,7)) {goto L108489;} else {goto L131416;}
L108489: if (VAL(V,18)) {goto L119785;} else {goto L123209;}
L123209: if (VAL(V,14)) {goto L107273;} else {goto L134568;}
L131416: if (VAL(V,18)) {goto L133768;} else {goto L130024;}
L130024: if (VAL(V,14)) {goto L134568;} else {goto L125721;}
L125721: if (VAL(V,6)) {goto L105737;} else {goto L134568;}
L118537: if (VAL(V,5)) {goto L125833;} else {goto L117368;}
L125833: if (VAL(V,15)) {goto L118521;} else {goto L106745;}
L118521: if (VAL(V,11)) {goto L143305;} else {goto L130712;}
L143305: if (VAL(V,18)) {goto L113913;} else {goto L123017;}
L106745: if (VAL(V,7)) {goto L109593;} else {goto L135257;}
L109593: if (VAL(V,11)) {goto L132089;} else {goto L137625;}
```

```
L132089: if (VAL(V,18)) {goto L145833;} else {goto L129113;}
L129113: if (VAL(V,14)) {goto L126729;} else {goto L145177;}
L135257: if (VAL(V,11)) {goto L145561;} else {goto L127976;}
L145561: if (VAL(V,18)) {goto L136249;} else {goto L114361;}
L114361: if (VAL(V,14)) {goto L145177;} else {goto L119113;}
L119113: if (VAL(V,6)) {goto L105737;} else {goto L145177;}
L127976: if (VAL(V,18)) {goto L116184;} else {goto L127112;}
L127112: if (VAL(V,14)) {goto L108376;} else {goto L108313;}
L108313: if (VAL(V,6)) {goto L105737;} else {goto L108376;}
L117368: if (VAL(V,15)) {goto L119528;} else {goto L107289;}
L119528: if (VAL(V,11)) {goto L118232;} else {goto L106841;}
L118232: if (VAL(V,18)) {goto L114008;} else {goto L115496;}
L106841: if (VAL(V,2)) {goto L105737;} else {goto L130712;}
L107289: if (VAL(V,7)) {goto L133817;} else {goto L118200;}
L133817: if (VAL(V,11)) {goto L136089;} else {goto L130617;}
L136089: if (VAL(V,18)) {goto L137465;} else {goto L134121;}
L134121: if (VAL(V,14)) {goto L133785;} else {goto L137272;}
L130617: if (VAL(V,2)) {goto L105737;} else {goto L137625;}
L118200: if (VAL(V,11)) {goto L145880;} else {goto L114201;}
L145880: if (VAL(V,18)) {goto L121512;} else {goto L108856;}
L108856: if (VAL(V,14)) {goto L134280;} else {goto L127593;}
L127593: if (VAL(V,6)) {goto L105737;} else {goto L134280;}
L114201: if (VAL(V,2)) {goto L105737;} else {goto L145208;}
L115001: if (VAL(V,0)) {goto L121929;} else {goto L107640;}
L121929: if (VAL(V,13)) {goto L105737;} else {goto L123593;}
L123593: if (VAL(V,5)) {goto L105737;} else {goto L144281;}
L144281: if (VAL(V,15)) {goto L105737;} else {goto L122473;}
L122473: if (VAL(V,7)) {goto L105737;} else {goto L143545;}
L143545: if (VAL(V,11)) {goto L105737;} else {goto L126793;}
L126793: if (VAL(V,2)) {goto L105737;} else {goto L145433;}
L107640: if (VAL(V,13)) {goto L137176;} else {goto L132857;}
L132857: if (VAL(V,5)) {goto L125161;} else {goto L143912;}
L143912: if (VAL(V,15)) {goto L125560;} else {goto L134601;}
L134601: if (VAL(V,7)) {goto L106681;} else {goto L125608;}
L125608: if (VAL(V,11)) {goto L115672;} else {goto L135609;}
L135609: if (VAL(V,2)) {goto L145433;} else {goto L109016;}
L109016: if (VAL(V,18)) {goto L121512;} else {goto L143000;}
L143000: if (VAL(V,14)) {goto L145656;} else {goto L132889;}
L132889: if (VAL(V,6)) {goto L145577;} else {goto L143928;}
```

```
L143928: if (VAL(V,17)) {goto L108632;} else {goto L135672;}
L135672: if (VAL(V,20)) {goto L121448;} else {goto L118008;}
L118008: if (VAL(V,21)) {goto L130584;} else {goto L128344;}
L128344: if (VAL(V,8)) {goto L136440;} else {goto L115448;}
L115448: if (VAL(V,16)) {goto L136056;} else {goto L122056;}
L122056: if (VAL(V,19)) {goto L129368;} else {goto L129688;}
L129688: if (VAL(V,22)) {goto L136472;} else {goto L136376;}
L136376: if (VAL(V,23)) {goto L144408;} else {STATINV;goto
L130457;}
L105736: return !statInv;
L105737: return statInv;
}
```

ANNEXE IV

```
#define BDDV_RET_POS_VAL(a) return ((a)? !statInv : statInv)
#define BDDV_RET_NEG_VAL(a) return ((a)? statInv : !statInv)
#define BDDV_RET_SIMPLE(a) return (a)


/*------------------- statistics -------------------*/
#if defined(_STATISTICS_)
extern int TESTS_nb;
#define VAL(tab,index) ( ++TESTS_nb ? tab[index] : tab[index]
)
#else
#define VAL(tab,index) tab[index]
#endif
/*---------------------------------------------------*/


int BDD_Is06Simple_AndNotEnd (register const int *V)
{int statInv = 0;
if (VAL(V,12))
  if (VAL(V,13))
    if (VAL(V,10))
      if (VAL(V,9))
        if (VAL(V,15))
          if (VAL(V,16))
            if (VAL(V,4))
              if (VAL(V,3))
                if (VAL(V,1))
                  if (VAL(V,0))
                    if (VAL(V,5))
                      if (VAL(V,7))
                        if (VAL(V,8))
                          if (VAL(V,2))
                            if (VAL(V,6))
                              if (VAL(V,11))
                                if (VAL(V,14))
                                  if (VAL(V,20))
                                    if (VAL(V,17))
                                      if (VAL(V,18))
                                        if (VAL(V,19))
```

EP 0 967 573 B1

```
                                        if (VAL(V,22))
                                  Lbl0: if (VAL(V,21))


BDDV_RET_NEG_VAL(VAL(V,24));

                                          else


BDDV_RET_SIMPLE(!statInv);

                                    else
                                        Lbl1: if
(VAL(V,23))

BDDV_RET_SIMPLE(!statInv);

                                    else
                                      {goto Lbl0;}
                                  else
                                  Lbl2: if (VAL(V,22))


BDDV_RET_NEG_VAL(VAL(V,21));

                                    else
                                      {goto Lbl1;}
                                else
                                Lbl3: if (VAL(V,22))
                                Lbl4: if (VAL(V,23))
                                          Lbl5: if
(VAL(V,21))
                                          Lbl6: if
(VAL(V,24))

BDDV_RET_POS_VAL(VAL(V,25));

                                          else


BDDV_RET_SIMPLE(statInv);

                                        else


BDDV_RET_SIMPLE(!statInv);

                                      else


BDDV_RET_NEG_VAL(VAL(V,21));

                                  else
```

34

```
                                            {goto Lbl1;}
                                         else
                                           if (VAL(V,18))


BDDV_RET_NEG_VAL(VAL(V,21));

                                              else
                                                {goto Lbl3;}
                                         else
                                           if (VAL(V,18))
                                             Lbl7: if (VAL(V,19))
                                               if (VAL(V,22))
                                                 Lbl8: if (VAL(V,21))
                                                        Lbl9: if

(VAL(V,24))

BDDV_RET_POS_VAL(VAL(V,25));
                                                   else


BDDV_RET_SIMPLE(!statInv);
                                                  else


BDDV_RET_SIMPLE(!statInv);

                                              else
                                                {goto Lbl10;}
                                           else
                                             if (VAL(V,22))


BDDV_RET_NEG_VAL(VAL(V,21));

                                              else
                                                {goto Lbl10;}
                                         else
                                           if (VAL(V,22))
                                             {goto Lbl8;}
                                           else
                                             Lbl10: if (VAL(V,21))


BDDV_RET_POS_VAL(VAL(V,24));

                                              else
```

```
BDDV_RET_SIMPLE(!statInv);
                                    else
                                      Lbl11: if (VAL(V,20))
                                        if (VAL(V,17))
                                          if (VAL(V,18))
                                            {goto Lbl7;}
                                          else


BDDV_RET_NEG_VAL(VAL(V,21));
                                      else


BDDV_RET_NEG_VAL(VAL(V,21));
                                    else
                                      Lbl12: if (VAL(V,18))
                                        if (VAL(V,19))
                                          if (VAL(V,22))
                                            {goto Lbl8;}
                                          else


BDDV_RET_NEG_VAL(VAL(V,21));
                                      else


BDDV_RET_NEG_VAL(VAL(V,21));
                                    else
                                      Lbl13: if (VAL(V,22))
                                        {goto Lbl5;}
                                      else


BDDV_RET_NEG_VAL(VAL(V,21));
                                  else
                                    Lbl14: if (VAL(V,14))
                                      if (VAL(V,20))
                                        if (VAL(V,17))
                                          if (VAL(V,18))
                                            {goto Lbl3;}
                                          else
                                            Lbl15: if (VAL(V,22))
                                              {goto Lbl4;}
```

```
                                    else
                                        Lbl16: if
(VAL(V,23))
                                          {goto Lbl10;}
                                        else

BDDV_RET_NEG_VAL(VAL(V,21));
                                else
                                  if (VAL(V,18))

BDDV_RET_NEG_VAL(VAL(V,21));
                                  else
                                    {goto Lbl15;}
                                else
                                  if (VAL(V,18))

BDDV_RET_NEG_VAL(VAL(V,21));
                                  else
                                    {goto Lbl13;}
                              else
                                BDDV_RET_SIMPLE(statInv);
                            else
                              if (VAL(V,11))
                                if (VAL(V,14))
                                  BDDV_RET_SIMPLE(statInv);
                                else
                                  {goto Lbl11;}
                              else
                                BDDV_RET_SIMPLE(statInv);
                          else
                            if (VAL(V,6))
                              if (VAL(V,11))
                                BDDV_RET_SIMPLE(statInv);
                              else
                                {goto Lbl14;}
                            else
                              BDDV_RET_SIMPLE(statInv);
                        else
                          BDDV_RET_SIMPLE(statInv);
```

```
                              else
                        Lbl17: if (VAL(V,2))
                          if (VAL(V,11))
                            if (VAL(V,14))
                              Lbl18: if (VAL(V,20))
                                if (VAL(V,17))
                                  Lbl19: if (VAL(V,18))
                                    Lbl20: if (VAL(V,19))
                                      Lbl21: if (VAL(V,22))
                                        Lbl22: if (VAL(V,23))
                                              Lbl23: if
(VAL(V,21))

                                            {goto Lbl6;}
                                          else

BDDV_RET_SIMPLE(statInv);
                                        else

BDDV_RET_SIMPLE(statInv);
                                      else

BDDV_RET_SIMPLE(statInv);
                                    else

BDDV_RET_SIMPLE(statInv);
                                  else
                                    BDDV_RET_SIMPLE(statInv);
                                else
                                    BDDV_RET_SIMPLE(statInv);
                              else
                                BDDV_RET_SIMPLE(statInv);
                            else
                              if (VAL(V,20))
                                if (VAL(V,17))
                                  if (VAL(V,18))
                                    if (VAL(V,19))
                                      if (VAL(V,22))
                                        if (VAL(V,21))
                                          {goto Lbl9;}
```

```
                                                        else


        BDDV_RET_SIMPLE(statInv);
                                            else


        BDDV_RET_SIMPLE(statInv);
                                        else


        BDDV_RET_SIMPLE(statInv);
                                    else
                                      BDDV_RET_SIMPLE(statInv);
                                  else
                                    BDDV_RET_SIMPLE(statInv);
                                else
                                  Lbl24: if (VAL(V,18))
                                    if (VAL(V,19))
                                      Lbl25: if (VAL(V,22))
                                        {goto Lbl23;}
                                      else


        BDDV_RET_SIMPLE(statInv);
                                    else
                                      BDDV_RET_SIMPLE(statInv);
                                  else
                                    BDDV_RET_SIMPLE(statInv);
                              else
                                BDDV_RET_SIMPLE(statInv);
                            else
                              BDDV_RET_SIMPLE(statInv);
                          else
                            if (VAL(V,7))
                              Lbl26: if (VAL(V,6))
                                if (VAL(V,11))
                                  Lbl27: if (VAL(V,14))
                                    {goto Lbl18;}
                                  else
                                    BDDV_RET_SIMPLE(statInv);
                              else
```

```
                              if (VAL(V,14))
                                if (VAL(V,20))
                                  if (VAL(V,17))
                                    if (VAL(V,18))
                                      if (VAL(V,22))
                                        {goto Lbl22;}
                                      else
                                        Lbl28: if (VAL(V,23))
                                        {statInv=(!statInv);goto
Lbl0;}
                                        else

BDDV_RET_SIMPLE(statInv);
                                      else
                                        {goto Lbl21;}
                                    else
                                      Lbl29: if (VAL(V,18))
                                       BDDV_RET_SIMPLE(statInv);
                                      else
                                        {goto Lbl21;}
                                  else
                                    BDDV_RET_SIMPLE(statInv);
                                else
                                  BDDV_RET_SIMPLE(statInv);
                              else
                                BDDV_RET_SIMPLE(statInv);
                            else
                              Lbl30: if (VAL(V,11))
                                Lbl31: if (VAL(V,14))
                                  {goto Lbl18;}
                                else
                                  if (VAL(V,20))
                                    if (VAL(V,17))
                                      {goto Lbl24;}
                                    else
                                      BDDV_RET_SIMPLE(statInv);
                                  else
                                    BDDV_RET_SIMPLE(statInv);
                              else
```

```
                   Lbl32: if (VAL(V,14))
                      if (VAL(V,20))
                         if (VAL(V,17))
                            Lbl33: if (VAL(V,18))
                               {goto Lbl21;}
                            else
                               BDDV_RET_SIMPLE(statInv);
                         else
                            BDDV_RET_SIMPLE(statInv);
                      else
                         BDDV_RET_SIMPLE(statInv);
                   else
                      BDDV_RET_SIMPLE(statInv);
             else
                BDDV_RET_SIMPLE(statInv);
          else
             if (VAL(V,5))
                if (VAL(V,7))
                   if (VAL(V,8))
                      {goto Lbl26;}
                   else
                      BDDV_RET_SIMPLE(statInv);
                else
                   BDDV_RET_SIMPLE(statInv);
             else
                if (VAL(V,7))
                   if (VAL(V,6))
                      if (VAL(V,11))
                         {goto Lbl27;}
                      else
                         {goto Lbl32;}
                   else
                      BDDV_RET_SIMPLE(statInv);
                else
                   Lbl34: if (VAL(V,11))
                      {goto Lbl27;}
                   else
                      BDDV_RET_SIMPLE(statInv);
       else
```

```
if (VAL(V,1))
  if (VAL(V,5))
    if (VAL(V,7))
      if (VAL(V,8))
        {goto Lbl17;}
      else
        BDDV_RET_SIMPLE(statInv);
    else
      if (VAL(V,2))
        if (VAL(V,11))
          {goto Lbl31;}
        else
          BDDV_RET_SIMPLE(statInv);
      else
        BDDV_RET_SIMPLE(statInv);
  else
    if (VAL(V,7))
      BDDV_RET_SIMPLE(statInv);
    else
      {goto Lbl34;}
else
  if (VAL(V,5))
    if (VAL(V,7))
      if (VAL(V,8))
        {goto Lbl30;}
      else
        BDDV_RET_SIMPLE(statInv);
    else
      {goto Lbl34;}
  else
    if (VAL(V,7))
      {goto Lbl34;}
    else
      BDDV_RET_SIMPLE(statInv);
else
  {goto Lbl30;}
else
  if (VAL(V,4))
    if (VAL(V,3))
```

```
            if (VAL(V,1))
              if (VAL(V,0))
                if (VAL(V,5))
                  if (VAL(V,7))
                    if (VAL(V,2))
                      if (VAL(V,6))
                        if (VAL(V,11))
                          if (VAL(V,14))
                            if (VAL(V,20))
                              if (VAL(V,17))
                                if (VAL(V,18))
                                  if (VAL(V,19))
                                    {goto Lbl1;}
                                  else
                                    {goto Lbl2;}
                                else
                                  Lbl35: if (VAL(V,22))


BDDV_RET_NEG_VAL(VAL(V,21));

                                  else
                                    {goto Lbl16;}
                                else
                                  if (VAL(V,18))


BDDV_RET_NEG_VAL(VAL(V,21));

                                else
                                  {goto Lbl35;}
                              else
                                if (VAL(V,18))
                                  if (VAL(V,19))
                                    if (VAL(V,22))
                                      {goto Lbl0;}
                                    else


BDDV_RET_NEG_VAL(VAL(V,21));

                                  else


BDDV_RET_NEG_VAL(VAL(V,21));

                                else
```

```
BDDV_RET_NEG_VAL(VAL(V,21));
                                        else
                                          Lbl36: if (VAL(V,20))
                                            if (VAL(V,17))
                                              if (VAL(V,18))
                                                if (VAL(V,19))
                                                  if (VAL(V,22))
                                                {statInv=(!statInv);goto
Lbl10;}
                                                else

BDDV_RET_SIMPLE(statInv);
                                              else

BDDV_RET_SIMPLE(statInv);
                                            else

BDDV_RET_SIMPLE(statInv);
                                          else
                                            BDDV_RET_SIMPLE(statInv);
                                        else
                                          BDDV_RET_SIMPLE(statInv);
                                      else
                                        Lbl37: if (VAL(V,14))
                                          if (VAL(V,20))
                                            if (VAL(V,17))
                                              if (VAL(V,18))
                                                Lbl38: if (VAL(V,22))

BDDV_RET_SIMPLE(statInv);
                                                else
                                                  {goto Lbl28;}
                                              else

BDDV_RET_SIMPLE(statInv);
                                            else
                                              BDDV_RET_SIMPLE(statInv);
                                          else
```

```
                                        BDDV_RET_SIMPLE(statInv);
                                  else
                                    BDDV_RET_SIMPLE(statInv);
                              else
                                if (VAL(V,11))
                                  if (VAL(V,14))
                                    BDDV_RET_SIMPLE(statInv);
                                  else
                                    {goto Lbl36;}
                                else
                                  BDDV_RET_SIMPLE(statInv);
                          else
                            if (VAL(V,6))
                              if (VAL(V,11))
                                BDDV_RET_SIMPLE(statInv);
                              else
                                {goto Lbl37;}
                            else
                              BDDV_RET_SIMPLE(statInv);
                        else
                          if (VAL(V,2))
                            if (VAL(V,11))
                              if (VAL(V,14))
                                Lbl39: if (VAL(V,20))
                                  if (VAL(V,17))
                                    if (VAL(V,18))
                                      if (VAL(V,19))
                                        if (VAL(V,22))
                                          if (VAL(V,23))

BDDV_RET_POS_VAL(VAL(V,21));

                                          else
                                          {statInv=(!statInv);goto
Lbl10;}

                                        else
                                          {goto Lbl28;}
                                      else
                                        {goto Lbl38;}
                                    else
```

```
                                    BDDV_RET_SIMPLE(statInv);
                                  else
                                    BDDV_RET_SIMPLE(statInv);
                                else
                                  BDDV_RET_SIMPLE(statInv);
                              else
                                if (VAL(V,20))
                                  if (VAL(V,17))
                                    if (VAL(V,18))
                                      if (VAL(V,19))
                                        if (VAL(V,22))
                                      {statInv=(!statInv);goto
Lbl0;}
                                      else

BDDV_RET_SIMPLE(statInv);
                                        else
                                          BDDV_RET_SIMPLE(statInv);
                                      else
                                        BDDV_RET_SIMPLE(statInv);
                                    else
                                      BDDV_RET_SIMPLE(statInv);
                                  else
                                    BDDV_RET_SIMPLE(statInv);
                              else
                                BDDV_RET_SIMPLE(statInv);
                            else
                              BDDV_RET_SIMPLE(statInv);
                          else
                            if (VAL(V,7))
                              if (VAL(V,6))
                                if (VAL(V,11))
                                  if (VAL(V,14))
                                    {goto Lbl39;}
                                  else
                                    BDDV_RET_SIMPLE(statInv);
                                else
                                  if (VAL(V,14))
                                    if (VAL(V,20))
```

```
                              if (VAL(V,17))
                                if (VAL(V,18))
                                  Lbl40: if (VAL(V,22))
                                    {goto Lbl28;}
                                  else


BDDV_RET_SIMPLE(statInv);
                                      else
                                       BDDV_RET_SIMPLE(statInv);
                                    else
                                       BDDV_RET_SIMPLE(statInv);
                                  else
                                    BDDV_RET_SIMPLE(statInv);
                                else
                                  BDDV_RET_SIMPLE(statInv);
                              else
                                BDDV_RET_SIMPLE(statInv);
                            else
                              Lbl41: if (VAL(V,11))
                                if (VAL(V,14))
                                  if (VAL(V,20))
                                    if (VAL(V,17))
                                      if (VAL(V,18))
                                        if (VAL(V,19))
                                          {goto Lbl40;}
                                        else
                                         BDDV_RET_SIMPLE(statInv);
                                      else
                                        BDDV_RET_SIMPLE(statInv);
                                    else
                                      BDDV_RET_SIMPLE(statInv);
                                  else
                                    BDDV_RET_SIMPLE(statInv);
                                else
                                  BDDV_RET_SIMPLE(statInv);
                              else
                                BDDV_RET_SIMPLE(statInv);
                          else
                            BDDV_RET_SIMPLE(statInv);
```

```
            else
              if (VAL(V,5))
                BDDV_RET_SIMPLE(statInv);
              else
                if (VAL(V,7))
                  if (VAL(V,6))
                    {goto Lbl41;}
                  else
                    BDDV_RET_SIMPLE(statInv);
                else
                  BDDV_RET_SIMPLE(statInv);
          else
            if (VAL(V,1))
              if (VAL(V,5))
                if (VAL(V,7))
                  BDDV_RET_SIMPLE(statInv);
                else
                  if (VAL(V,2))
                    {goto Lbl41;}
                  else
                    BDDV_RET_SIMPLE(statInv);
              else
                BDDV_RET_SIMPLE(statInv);
            else
              BDDV_RET_SIMPLE(statInv);
          else
            {goto Lbl41;}
      else
        if (VAL(V,4))
          if (VAL(V,3))
            if (VAL(V,1))
              if (VAL(V,0))
                if (VAL(V,5))
                  if (VAL(V,2))
                    if (VAL(V,11))
                      if (VAL(V,20))
                        if (VAL(V,17))
                          if (VAL(V,18))
                            if (VAL(V,19))
```

```
                    BDDV_RET_SIMPLE(!statInv);
                  else
                    Lbl42: if (VAL(V,22))
                      BDDV_RET_NEG_VAL(VAL(V,21));
                      else
                        BDDV_RET_SIMPLE(!statInv);
                  else
                    BDDV_RET_NEG_VAL(VAL(V,21));
                else
                  BDDV_RET_NEG_VAL(VAL(V,21));
              else
                Lbl43: if (VAL(V,18))
                  if (VAL(V,19))
                    if (VAL(V,22))
                      BDDV_RET_SIMPLE(!statInv);
                    else
                      BDDV_RET_NEG_VAL(VAL(V,21));
                  else
                    BDDV_RET_NEG_VAL(VAL(V,21));
                else
                  BDDV_RET_NEG_VAL(VAL(V,21));
            else
              BDDV_RET_SIMPLE(statInv);
          else
            BDDV_RET_SIMPLE(statInv);
      else
        Lbl44: if (VAL(V,11))
          if (VAL(V,20))
            if (VAL(V,17))
              Lbl45: if (VAL(V,18))
                if (VAL(V,19))
                {statInv=(!statInv);goto Lbl42;}
                else
                  BDDV_RET_SIMPLE(statInv);
              else
                BDDV_RET_SIMPLE(statInv);
          else
            BDDV_RET_SIMPLE(statInv);
      else
```

```
                                          BDDV_RET_SIMPLE(statInv);

                          else
                            BDDV_RET_SIMPLE(statInv);
                        else
                          BDDV_RET_SIMPLE(statInv);
                      else
                        BDDV_RET_SIMPLE(statInv);
                  else
                    if (VAL(V,1))
                      if (VAL(V,5))
                        if (VAL(V,2))
                          {goto Lbl44;}
                        else
                          BDDV_RET_SIMPLE(statInv);
                      else
                        BDDV_RET_SIMPLE(statInv);
                    else
                      BDDV_RET_SIMPLE(statInv);
                else
                  {goto Lbl44;}
              else
                if (VAL(V,15))
                  if (VAL(V,16))
                    if (VAL(V,4))
                      if (VAL(V,3))
                        if (VAL(V,1))
                          if (VAL(V,5))
                            if (VAL(V,7))
                              if (VAL(V,8))
                                if (VAL(V,2))
                                  if (VAL(V,6))
                                    if (VAL(V,11))
                                      if (VAL(V,14))
                                        if (VAL(V,20))
                                          if (VAL(V,18))
                                            if (VAL(V,19))
                                              if (VAL(V,22))
                                                {goto Lbl4;}
```

```
                              else
                                  BDDV_RET_NEG_-
VAL(VAL(V,21));
                              else


BDDV_RET_NEG_VAL(VAL(V,21));
                                  else
                                    {goto Lbl15;}
                                  else
                                    {goto Lbl12;}
                                else
                                  Lbl46: if (VAL(V,20))
                                    BDDV_RET_SIMPLE(statInv);
                                  else
                                    {goto Lbl24;}
                              else
                                Lbl47: if (VAL(V,14))
                                  if (VAL(V,20))
                                    {goto Lbl29;}
                                  else
                                    BDDV_RET_SIMPLE(statInv);
                                else
                                  BDDV_RET_SIMPLE(statInv);
                            else
                              if (VAL(V,11))
                                if (VAL(V,14))
                                  BDDV_RET_SIMPLE(statInv);
                                else
                                  {goto Lbl46;}
                              else
                                BDDV_RET_SIMPLE(statInv);
                          else
                            if (VAL(V,6))
                              if (VAL(V,11))
                                BDDV_RET_SIMPLE(statInv);
                              else
                                {goto Lbl47;}
                            else
                              BDDV_RET_SIMPLE(statInv);
```

```
            else
              BDDV_RET_SIMPLE(statInv);
          else
            BDDV_RET_SIMPLE(statInv);
        else
          BDDV_RET_SIMPLE(statInv);
      else
        if (VAL(V,5))
          if (VAL(V,7))
            if (VAL(V,8))
              if (VAL(V,6))
                if (VAL(V,11))
                  if (VAL(V,14))
                    Lbl48: if (VAL(V,20))
                      if (VAL(V,18))
                        {goto Lbl20;}
                      else
                        {goto Lbl21;}
                    else
                      {goto Lbl24;}
                  else
                    BDDV_RET_SIMPLE(statInv);
                else
                  if (VAL(V,14))
                    if (VAL(V,20))
                      {goto Lbl33;}
                    else
                      BDDV_RET_SIMPLE(statInv);
                  else
                    BDDV_RET_SIMPLE(statInv);
              else
                BDDV_RET_SIMPLE(statInv);
            else
              BDDV_RET_SIMPLE(statInv);
          else
            BDDV_RET_SIMPLE(statInv);
        else
          if (VAL(V,7))
            if (VAL(V,6))
```

```
Lbl49: if (VAL(V,11))
  if (VAL(V,14))
    if (VAL(V,20))
      {goto Lbl19;}
    else
      BDDV_RET_SIMPLE(statInv);
  else
    BDDV_RET_SIMPLE(statInv);
  else
    BDDV_RET_SIMPLE(statInv);
else
  BDDV_RET_SIMPLE(statInv);
else
  BDDV_RET_SIMPLE(statInv);
else
  if (VAL(V,1))
    if (VAL(V,5))
      if (VAL(V,7))
        if (VAL(V,8))
          if (VAL(V,2))
            if (VAL(V,11))
              if (VAL(V,14))
                {goto Lbl48;}
              else
                if (VAL(V,20))
                  {goto Lbl24;}
                else
                  BDDV_RET_SIMPLE(statInv);
            else
              BDDV_RET_SIMPLE(statInv);
          else
            BDDV_RET_SIMPLE(statInv);
        else
          BDDV_RET_SIMPLE(statInv);
      else
        if (VAL(V,2))
          {goto Lbl49;}
        else
          BDDV_RET_SIMPLE(statInv);
```

```
                      else
                        BDDV_RET_SIMPLE(statInv);
                    else
                      if (VAL(V,5))
                        if (VAL(V,7))
                          if (VAL(V,8))
                            {goto Lbl49;}
                          else
                            BDDV_RET_SIMPLE(statInv);
                        else
                          BDDV_RET_SIMPLE(statInv);
                      else
                        BDDV_RET_SIMPLE(statInv);
                  else
                    {goto Lbl49;}
                else
                  BDDV_RET_SIMPLE(statInv);
              else
                BDDV_RET_SIMPLE(statInv);
          else
            if (VAL(V,15))
              if (VAL(V,16))
                if (VAL(V,4))
                  if (VAL(V,3))
                    if (VAL(V,5))
                      if (VAL(V,7))
                        if (VAL(V,8))
                          if (VAL(V,6))
                            if (VAL(V,14))
                              if (VAL(V,20))
                                {goto Lbl15;}
                              else
                                {goto Lbl13;}
                            else
                              BDDV_RET_SIMPLE(statInv);
                          else
                            BDDV_RET_SIMPLE(statInv);
                        else
                          BDDV_RET_SIMPLE(statInv);
```

```
                    else
                      BDDV_RET_SIMPLE(statInv);
                  else
                    if (VAL(V,7))
                      if (VAL(V,6))
                        Lbl50: if (VAL(V,14))
                          if (VAL(V,20))
                            {goto Lbl21;}
                          else
                            BDDV_RET_SIMPLE(statInv);
                        else
                          BDDV_RET_SIMPLE(statInv);
                      else
                        BDDV_RET_SIMPLE(statInv);
                    else
                      BDDV_RET_SIMPLE(statInv);
                  else
                    if (VAL(V,5))
                      if (VAL(V,7))
                        if (VAL(V,8))
                          {goto Lbl50;}
                        else
                          BDDV_RET_SIMPLE(statInv);
                      else
                        BDDV_RET_SIMPLE(statInv);
                    else
                      BDDV_RET_SIMPLE(statInv);
                else
                  {goto Lbl50;}
              else
                BDDV_RET_SIMPLE(statInv);
            else
              BDDV_RET_SIMPLE(statInv);
      else
        if (VAL(V,10))
          if (VAL(V,9))
            if (VAL(V,15))
              if (VAL(V,4))
                if (VAL(V,3))
```

```
if (VAL(V,1))
  if (VAL(V,0))
    if (VAL(V,7))
      if (VAL(V,6))
        if (VAL(V,14))
          if (VAL(V,20))
            if (VAL(V,17))
              if (VAL(V,18))
                {goto Lbl1;}
              else
                {goto Lbl16;}
            else
              if (VAL(V,18))
                BDDV_RET_NEG_VAL(VAL(V,21));
              else
                {goto Lbl16;}
          else
            BDDV_RET_NEG_VAL(VAL(V,21));
        else
          BDDV_RET_SIMPLE(statInv);
      else
        BDDV_RET_SIMPLE(statInv);
    else
      Lbl51: if (VAL(V,14))
        if (VAL(V,20))
          if (VAL(V,17))
            if (VAL(V,18))
              {goto Lbl28;}
            else
              BDDV_RET_SIMPLE(statInv);
          else
            BDDV_RET_SIMPLE(statInv);
        else
          BDDV_RET_SIMPLE(statInv);
      else
        BDDV_RET_SIMPLE(statInv);
  else
    BDDV_RET_SIMPLE(statInv);
else
```

```
        if (VAL(V,7))
          if (VAL(V,6))
            {goto Lbl51;}
          else
            BDDV_RET_SIMPLE(statInv);
        else
          BDDV_RET_SIMPLE(statInv);
      else
        BDDV_RET_SIMPLE(statInv);
    else
      {goto Lbl51;}
  else
    if (VAL(V,4))
      if (VAL(V,3))
        if (VAL(V,1))
          if (VAL(V,0))
            if (VAL(V,20))
              if (VAL(V,17))
                if (VAL(V,18))
                  BDDV_RET_SIMPLE(!statInv);
                else
                  BDDV_RET_NEG_VAL(VAL(V,21));
              else
                BDDV_RET_NEG_VAL(VAL(V,21));
            else
              BDDV_RET_NEG_VAL(VAL(V,21));
          else
            BDDV_RET_SIMPLE(statInv);
        else
          BDDV_RET_SIMPLE(statInv);
      else
        BDDV_RET_SIMPLE(statInv);
    else
      if (VAL(V,20))
        if (VAL(V,17))
          if (VAL(V,18))
            BDDV_RET_POS_VAL(VAL(V,21));
          else
            BDDV_RET_SIMPLE(statInv);
```

```
                else
                  BDDV_RET_SIMPLE(statInv);
              else
                BDDV_RET_SIMPLE(statInv);
          else
            BDDV_RET_SIMPLE(statInv);
        else
          if (VAL(V,15))
            if (VAL(V,4))
              if (VAL(V,3))
                if (VAL(V,7))
                  if (VAL(V,6))
                    if (VAL(V,14))
                      if (VAL(V,20))
                        {goto Lbl16;}
                      else
                        BDDV_RET_NEG_VAL(VAL(V,21));
                    else
                      BDDV_RET_SIMPLE(statInv);
                  else
                    BDDV_RET_SIMPLE(statInv);
                else
                  BDDV_RET_SIMPLE(statInv);
              else
                BDDV_RET_SIMPLE(statInv);
            else
              if (VAL(V,14))
                if (VAL(V,20))
                  {goto Lbl28;}
                else
                  BDDV_RET_SIMPLE(statInv);
              else
                BDDV_RET_SIMPLE(statInv);
          else
            BDDV_RET_SIMPLE(statInv);
    else
      if (VAL(V,13))
        if (VAL(V,10))
          if (VAL(V,15))
```

```
if (VAL(V,16))
  if (VAL(V,4))
    if (VAL(V,1))
      if (VAL(V,5))
        if (VAL(V,7))
          if (VAL(V,8))
            if (VAL(V,2))
              if (VAL(V,11))
                {goto Lbl2;}
              else
                BDDV_RET_SIMPLE(statInv);
            else
              BDDV_RET_SIMPLE(statInv);
          else
            BDDV_RET_SIMPLE(statInv);
        else
          if (VAL(V,2))
            Lbl52: if (VAL(V,11))
              {goto Lbl24;}
            else
              BDDV_RET_SIMPLE(statInv);
          else
            BDDV_RET_SIMPLE(statInv);
      else
        BDDV_RET_SIMPLE(statInv);
    else
      if (VAL(V,5))
        if (VAL(V,7))
          if (VAL(V,8))
            {goto Lbl52;}
          else
            BDDV_RET_SIMPLE(statInv);
        else
          BDDV_RET_SIMPLE(statInv);
      else
        BDDV_RET_SIMPLE(statInv);
  else
    {goto Lbl52;}
else
```

```
                BDDV_RET_SIMPLE(statInv);
           else
             if (VAL(V,4))
               if (VAL(V,1))
                 if (VAL(V,5))
                   if (VAL(V,2))
                     if (VAL(V,11))
                       {goto Lbl43;}
                     else
                       BDDV_RET_SIMPLE(statInv);
                   else
                     BDDV_RET_SIMPLE(statInv);
                 else
                   BDDV_RET_SIMPLE(statInv);
               else
                 BDDV_RET_SIMPLE(statInv);
             else
               if (VAL(V,11))
                 {goto Lbl45;}
               else
                 BDDV_RET_SIMPLE(statInv);
         else
           if (VAL(V,15))
             if (VAL(V,16))
               if (VAL(V,4))
                 if (VAL(V,5))
                   if (VAL(V,7))
                     if (VAL(V,8))
                       {goto Lbl13;}
                     else
                       BDDV_RET_SIMPLE(statInv);
                   else
                     BDDV_RET_SIMPLE(statInv);
                 else
                   BDDV_RET_SIMPLE(statInv);
               else
                 {goto Lbl25;}
             else
               BDDV_RET_SIMPLE(statInv);
```

```
        else
            BDDV_RET_SIMPLE(statInv);
    else
        BDDV_RET_SIMPLE(statInv);


            }
```

**Revendications**

1.  Dispositif de traitement de données d'acquisition, notamment de données d'image, comprenant :

    a) une première zone mémoire pour stocker une séquence de données d'acquisition, sous la forme d'éléments de séquence (V0, ..., VN), ayant chacun au moins un bit,
    b) une seconde zone mémoire comprenant un module d'accès à la première zone mémoire, laquelle est adressable pour accéder au voisinage d'un élément courant désigné (X),
    c) une troisième zone mémoire pour stocker un module de calcul, apte à recevoir en entrée une désignation d'au moins un élément courant (X), afin de délivrer en sortie un mot-résultat représentatif de l'application d'une fonction de traitement choisie (f), audit voisinage de cet élément courant (X), ce module comprenant un jeu d'instructions, avec des instructions-tests, portant chacune sur un bit, et formant à partir d'une instruction d'entrée, des trajets où les instructions-tests se relaient pour aboutir à des instructions finales définissant le mot-résultat, bit par bit,
    d) des moyens de commande pour mettre en oeuvre répétitivement ce module en coopération avec une mémoire de travail, sur la base d'éléments courants successifs, afin d'obtenir une multiplicité de mots-résultats, représentant un transformé au moins partiel de la séquence par ladite fonction de traitement,

    **caractérisé en ce que** le module de calcul est muni d'un jeu d'instructions optimisé par une technique de réduction d'arbre de décision binaire associé à ladite fonction, pour minimiser conjointement le nombre total d'instructions-tests cumulées sur l'ensemble des trajets définis par le jeu d'instructions-tests, et le nombre total d'instructions de ce jeu, ce qui permet d'augmenter la vitesse du traitement par un meilleur compromis entre l'encombrement mémoire du jeu d'instructions et sa vitesse d'exécution.

2.  Dispositif selon la revendication 1, **caractérisé en ce que** chaque instruction-test comporte un branchement conditionnel vers une autre instruction-test ou une instruction finale, fonction du bit testé, tandis que le jeu d'instructions-tests n'accède, en cours d'exécution, qu'une fois au plus, à un bit d'un élément du voisinage.

3.  Dispositif selon la revendication 2, **caractérisé en ce que** le module comporte, en zone mémoire, au plus deux instructions finales, tandis que les instructions-tests se relaient, en cours d'exécution, jusqu'à l'une des deux instructions finales, agencée pour désigner une variable-résultat représentative d'un bit du mot-résultat.

4.  Dispositif selon la revendication 3, **caractérisé en ce que** le jeu d'instructions-tests comporte des instructions-tests à branchements inverseurs, tandis que chaque bit du mot-résultat est défini en correspondance de la variable-résultat associée et d'une parité du nombre de branchements inverseurs empruntés en cours d'exécution.

5.  Dispositif selon l'une des revendications précédentes, **caractérisé en ce que** la première zone mémoire est agencée pour stocker une séquence de données d'image bidimensionnelle sous la forme d'une multiplicité de bits, comprenant au moins un bit par pixel de cette image, tandis que le module d'accès est agencé pour désigner un voisinage associé à un pixel courant (X), comportant huit pixels (V0, V1, V2, V3, V4, V5, V6, V7) premiers voisins du pixel courant (X) par un côté ou un sommet.

6.  Dispositif selon la revendication 5, **caractérisé en ce que** le module de calcul est agencé pour délivrer en sortie un mot-résultat, fonction des pixels du voisinage, et variable suivant que le pixel courant (X) est un point simple ou non, un pixel courant étant défini comme un point simple d'une image bidimensionnelle si l'un ou plusieurs des pixels du voisinage associé à ce pixel courant, nécessairement voisins deux à deux par un côté ou un sommet, ont des valeurs de bits égales à une valeur prédéterminée, tandis que l'un au moins des pixels (V1, V3, V4, V6) voisins du pixel courant (X) par un côté, a une valeur de bit conjuguée de ladite valeur prédéterminée.

7. Dispositif selon la revendication 6 prise en combinaison avec l'une des revendications 3 et 4, **caractérisé en ce que** l'instruction d'entrée est agencée pour tester un bit de l'un des quatre pixels (V3, V1, V4, V6) voisins du pixel courant (X) par un côté, tandis que le jeu d'instructions-tests est agencé d'une part pour comparer les bits de trois pixels (V3, V1, V4) voisins du pixel courant (X) par un côté, et ce, indépendamment des valeurs des bits des autres pixels du voisinage, et d'autre part, pour n'analyser un pixel voisin par un sommet (V0, V2, V5, V7) que si deux pixels du voisinage (V1,V3 ; V1,V4 ; V3,V6 ; V4,V6), chacun voisin de ce pixel et du pixel courant par un côté, ont des valeurs de bits égales à ladite valeur conjuguée.

8. Dispositif selon l'une des revendications précédentes, **caractérisé en ce que** la première zone mémoire est apte à stocker une séquence de données d'image tridimensionnelle sous la forme d'une multiplicité de bits comprenant au moins un bit par pavé de cette image, tandis que le module d'accès est agencé pour désigner un voisinage associé à un pavé courant (X), comportant vingt-six pavés (V0, ..., V25) premiers voisins du pavé courant (X), six (V4, V10, V12, V13, V15, V21) occupant le centre des faces d'un parallélépipède dont le pavé courant (X) est le centre, huit (V0, V2, V6, V8, V17, V19, V23, V25) occupant les sommets et douze (V1, V3, V5, V7, V9, V11, V14, V16, V18, V20, V22, V24) occupant les centres des arêtes.

9. Dispositif selon la revendication 8, **caractérisé en ce que** le module de calcul est agencé pour délivrer en sortie un mot-résultat, fonction des pavés du voisinage d'un pavé courant (X), et variable suivant que ce pavé courant (X) est un point simple ou non, un pavé courant étant défini comme un point simple d'une image tridimensionnelle si des pavés du voisinage associé à ce pavé courant, de valeurs respectives de bits égales à une valeur prédéterminée, sont voisins deux à deux par une face, un côté ou un sommet et s'il en existe au moins un, tandis que des pavés du voisinage de valeurs respectives de bits conjuguées de ladite valeur prédéterminée, sont voisins du pavé courant (X) par une face (V4, V10, V12, V13, V15, V21) et sont reliés entre eux par un pavé de valeur de bit égale à ladite valeur conjuguée, voisin du pavé courant (X) par une arête (V1, V3, V5, V7, V9, V11, V14, V16, V18, V20, V22, V24), et qu'il en existe au moins un.

10. Dispositif selon la revendication 9 prise en combinaison avec l'une des revendications 3 et 4, **caractérisé en ce que** l'instruction d'entrée est agencée pour tester un bit de l'un des six pavés (V3, V1, V4, V6) voisins du pavé courant (X) par une face, tandis que le jeu d'instructions-tests est agencé d'une part pour comparer les bits de cinq pavés du voisinage (V4, V10, V12, V13, V15) occupant chacun l'un des six centres des faces (V4, V10, V12, V13, V15, V21), et ce, indépendamment des bits des autres pavés du voisinage, et d'autre part, pour n'analyser le bit de l'un des pavés d'une face, que si le pavé (V4, V10, V12, V14, V16, V22) occupant le centre de cette face a une valeur de bit égale à ladite valeur conjuguée.

11. Dispositif selon l'une des revendications 6, 7, 9 et 10, **caractérisé en ce qu'**il comporte en outre un moyen de détection de points d'extrémité de traits et/ou de surfaces de l'image, tandis que le module de calcul comporte au moins une instruction-résultat, agencée pour coopérer conjointement avec les instructions finales et le moyen de détection, pour désigner un mot-résultat d'un élément courant (X), variable suivant que cet élément courant (X) est, d'une part, un point simple ou non, et d'autre part, un point d'extrémité ou non, ce qui permet d'effectuer un amincissement de traits et/ou de surfaces de l'image.

12. Dispositif selon l'une des revendications 3 à 11, **caractérisé en ce que** le module de calcul est agencé pour évaluer un mot-résultat (V15, V16, V17) sur la base de plusieurs éléments courants (V4, V7, V10) premiers voisins dans la séquence, et **en ce que** le module d'accès est agencé pour désigner un voisinage comportant ces éléments courants, ainsi que des éléments de la séquence premiers voisins des éléments courants, tandis que la variable-résultat est représentative de la véracité d'une hypothèse ("faux", "vrai") formulée sur chaque bit du mot-résultat, associé à un élément courant.

13. Dispositif selon la revendication 12, **caractérisé en ce que** le module de calcul est agencé pour évaluer un mot-résultat d'une fonction d'érosion et/ou de dilatation d'image, en attribuant à chaque élément courant un bit-résultat de valeur prédéterminée si tous les éléments du voisinage ont des valeurs respectives de bits égales à ladite valeur prédéterminée, et un bit-résultat de valeur conjuguée sinon.

14. Dispositif selon la revendication 11 prise en combinaison avec la revendication 13, **caractérisé en ce qu'**il com-

**EP 0 967 573 B1**

porte un système de gestion de l'image, apte à coopérer avec les moyens de commande pour permettre à un utilisateur de choisir une fonction de traitement parmi une érosion d'image, une dilatation d'image et un amincissement de traits et/ou de surfaces, tandis que le module de calcul est muni d'un jeu d'instructions optimisé par une technique de réduction d'arbre de décision binaire associé à la fonction de traitement choisie.

**15.** Dispositif selon l'une des revendications précédentes, **caractérisé en ce que** lesdites données d'acquisition sont relatives à une image médicale d'un tissu biologique, notamment humain.

**Claims**

**1.** Device for processing acquisition data, in particular image data, comprising:

a) a first memory area for storing a sequence of acquisition data, in the form of sequence elements (V0, ..., VN), each having at least one bit,
b) a second memory area comprising a module for access to the first memory area, which can be addressed in order to access the neighbourhood of a designated current element (X),
c) a third memory area for storing a calculation module, capable of receiving as input a designation of at least one current element (X), in order to deliver as output a result word representative of the application of a chosen processing function (f), to the said neighbourhood of this current element (X), this module comprising a set of instructions, with test instructions, each relating to one bit, and forming, from an input instruction, paths where the test instructions are relayed to reach final instructions defining the result word, bit by bit,
d) control means for repetitively implementing this module in cooperation with a working memory, on the basis of successive current elements, in order to obtain a multiplicity of result words, representing an at least partial transform of the sequence by the said processing function,

**characterized in that** the calculation module is provided with an instruction set optimized by a technique of reducing the binary decision tree associated with the said function, in order jointly to minimize the total number of test instructions accumulated over all the paths defined by the test instruction set, and the total number of instructions in this set, which makes it possible to increase the processing speed by a better compromise between the total memory occupancy of the instruction set and its execution speed.

**2.** Device according to Claim 1, **characterized in that** each test instruction has a conditional branch instruction to another test instruction or a final instruction, as a function of the bit which is tested, while the test instruction set accesses a bit of an element in the neighbourhood at most only once during execution.

**3.** Device according to Claim 2, **characterized in that** the module has, in the memory area, at most two final instructions, while the test instructions are relayed, during execution, to one of the two final instructions, designed to designate a result variable representative of one bit of the result word.

**4.** Device according to Claim 3, **characterized in that** the test instruction set has test instructions with inverting branch instructions, while each bit of the result word is defined in correspondence with the associated result variable and a parity of the number of inverting branch instructions taken during execution.

**5.** Device according to one of the preceding claims, **characterized in that** the first memory area is designed to store a sequence of two-dimensional image data in the form of a multiplicity of bits, comprising at least one bit per pixel of this image, while the access module is designed to designate a neighbourhood associated with a current pixel (X), containing eight nearest-neighbour pixels (V0, V1, V2, V3, V4, V5, V6, V7) of the current pixel (X) by a side or a vertex.

**6.** Device according to Claim 5, **characterized in that** the calculation module is designed to deliver as output a result word which is a function of the pixels of the neighbourhood and varies depending on whether or not the current pixel (X) is a simple point, a current pixel being defined as a simple point of a two-dimensional image if one or more of the pixels of the neighbourhood associated with this current pixel, necessarily pairwise neighbouring by a side or a vertex, have bit values equal to a predetermined value, while at least one of the pixels (V1, V3, V4, V6) neighbouring the current pixel (X) by a side has a bit value conjugate to the said predetermined value.

**7.** Device according to Claim 6 taken in combination with one of Claims 3 and 4, **characterized in that** the input

63

instruction is designed to test one bit of one of the four pixels (V3, V1, V4, V6) neighbouring the current pixel (X) by one side, while the test instruction set is designed on the one hand to compare the bits of three pixels (V3, V1, V4) neighbouring the current pixel (X) by one side, and to do so independently of the values of the bits of the other pixels of the neighbourhood, and on the other hand to analyse a pixel neighbouring by a vertex (V0, V2, V5, V7) only if two pixels of the neighbourhood (V1, V3; V1, V4; V3, V6; V4, V6), each neighbouring this pixel and the current pixel by a side, have bit values equal to the said conjugate value.

8. Device according to one of the preceding claims, **characterized in that** the first memory area is capable of storing a sequence of three-dimensional image data in the form of a multiplicity of bits comprising at least one bit per block of this image, while the access module is designed to designate a neighbourhood associated with a current block (X), containing twenty-six nearest-neighbour blocks (V0, ..., V25) of the current block (X), six (V4, V10, V12, V13, V15, V21) occupying the centre of the faces of a parallelepiped of which the current block (X) is the centre, eight (V0, V2, V6, V8, V17, V19, V23, V25) occupying the vertices and twelve (V1, V3, V5, V7, V9, V11, V14, V16, V18, V20, V22, V24) occupying the centres of the edges.

9. Device according to Claim 8, **characterized in that** the calculation module is designed to deliver as output a result word which is a function of the blocks of the neighbourhood of a current block (X) and varies depending on whether or not this current block (X) is a simple point, a current block being defined as a simple point of a three-dimensional image if blocks of the neighbourhood associated with this current block, with respective bit values equal to a predetermined value, are pairwise neighbours by a face, a side or a vertex and if there is at least one of them, while blocks of the neighbourhood with respective bit values conjugate to the said predetermined value are neighbours of the current block (X) by a face (V4, V10, V12, V13, V15, V21) and are connected together by a block with bit value equal to the said conjugate value, neighbouring the current block (X) by an edge (V1, V3, V5, V7, V9, V11, V14, V16, V18, V20, V22, V24), and if there is at least one of them.

10. Device according to Claim 9 taken in combination with one of Claims 3 and 4, **characterized in that** the input instruction is designed to test one bit of one of the six blocks (V3, V1, V4, V6) neighbouring the current block (X) by a face, while the test instruction set is designed on the one hand to compare the bits of five blocks of the neighbourhood (V4, V10, V12, V13, V15) each occupying one of the six centres of the faces (V4, V10, V12, V13, V15, V21), and to do so independently of the bits of the other blocks of the neighbourhood, and on the other hand to analyse the bit of one of the blocks of a face only if the block (V4, V10, V12, V14, V16, V22) occupying the centre of this face has a bit value equal to the said conjugate value.

11. Device according to one of Claims 6, 7, 9 and 10, **characterized in that** it furthermore has a means for detecting end points of lines and/or surfaces of the image, while the calculation module has at least one result instruction designed to cooperate jointly with the final instructions and the detection means in order to designate a result word of a current element (X), which varies depending on whether or not this current element (X) is, on the one hand, a simple point and, on the other hand, an end point which makes it possible to perform thinning of lines and/or surfaces of the image.

12. Device according to one of Claims 3 to 11, **characterized in that** the calculation module is designed to evaluate a result word (V15, V16, V17) on the basis of a plurality of nearest-neighbour current elements (V4, V7, V10) in the sequence, and **in that** the access module is designed to designate a neighbourhood containing these current elements, as well as elements of the nearest-neighbour sequence of the current elements, while the result variable is representative of the truth of a hypothesis ("false", "true") formulated on each bit of the result word associated with a current element.

13. Device according to Claim 12, **characterized in that** the calculation module is designed to evaluate a result word of an image erosion and/or dilation function, by assigning to each current element a result bit of predetermined value if all the elements of the neighbourhood have respective bit values equal to the said predetermined value, and a result bit of conjugate value otherwise.

14. Device according to Claim 11 taken in combination with Claim 13, **characterized in that** it has a system for managing the image, which can cooperate with the control means in order to allow a user to choose a processing function from among image erosion, image dilation and thinning of lines and/or surfaces, while the calculation module is provided with an instruction set optimized by a technique of reducing the binary decision tree associated with the chosen processing function.

**15.** Device according to one of the preceding claims, **characterized in that** the said acquisition data relate to a medical image of biological, in particular human tissue.

**Patentansprüche**

**1.** Vorrichtung zur Verarbeitung von Erfassungsdaten, insbesondere Bilddaten, umfassend:

a) eine erste Speicherzone zum Speichern einer Erfassungsdatensequenz in der Form von Sequenzelementen (V0, ..., VN), von denen jedes wenigstens ein Bit hat,
b) eine zweite Speicherzone mit einem Zugriffsmodul auf die erste Speicherzone, die adressierbar ist, um auf die Umgebung eines bezeichneten laufenden Elements (X) zuzugreifen,
c) eine dritte Speicherzone zum Speichern eines Rechenmoduls, fähig als Eingang eine Bezeichnung wenigstens eines laufenden Elements (X) zu empfangen, um als Ausgang ein Resultat-Wort zu liefern, repräsentativ für die Anwendung einer gewählten Verarbeitungsfunktion (f), in der genannten Umgebung dieses laufenden Elements (X), wobei dieser Modul einen Satz Instruktionen umfasst, mit Testinstruktionen, jede ein Bit betreffend, und aufgrund einer Eingangsinstruktion Wege bildet, wo die Testinstruktionen sich abwechseln bzw. sich ablösen, um in Endinstruktionen zu münden, die Bit für Bit das Resultat-Wort definieren,
d) Steuereinrichtungen, um diesen Modul repetitiv mit einem Arbeitsspeicher kooperieren zu lassen, auf der Basis von sukzessiven laufenden Elementen, um eine Vielzahl von Resultat-Wörtern zu erhalten, die durch die genannte Verarbeitungsfunktion wenigstens eine partielle Transformierte der Sequenz repräsentieren,

**dadurch gekennzeichnet,**
**dass** der Rechenmodul mit einem Satz Instruktionen ausgestattet ist, optimiert durch eine der genannten Funktion zugeordnete binäre Entscheidungsbaum-Reduktionstechnik, um gemeinsam die Gesamtzahl der kumulierten Testinstruktionen bezüglich der Gesamtheit der durch den Testinstruktionen-Satz definierten Wege und die Gesamtzahl der Instruktionen dieses Satzes zu minimieren, was ermöglicht, durch einen besseren Kompromiss zwischen dem Speicherplatzbedarf des Instruktionensatzes und seiner Ausführungsgeschwindigkeit die Verarbeitungsgeschwindigkeit zu erhöhen.

**2.** Vorrichtung nach Anspruch 1, **dadurch gekennzeichnet, dass** jede Testinstruktion eine bedingte Verzweigung zu einer anderen Testinstruktion oder einer Endinstruktion umfasst, abhängig von dem getesteten Bit, während der Testinstruktionensatz im Laufe der Ausführung höchstens einmal auf ein Bit eines Elements der Umgebung zugreift.

**3.** Vorrichtung nach Anspruch 2, **dadurch gekennzeichnet, dass** der Modul in der Speicherzone höchstens zwei Endinstruktionen umfasst, während die Testinstruktionen sich im Laufe der Ausführung abwechseln bzw. ablösen, bis zu einer der beiden Endinstruktionen, eingerichtet um eine Resultat-Variable zu bezeichnen, die repräsentativ ist für ein Bit des Resultat-Worts.

**4.** Vorrichtung nach Anspruch 3, **dadurch gekennzeichnet, dass** der Testinstruktionensatz Testinstruktionen mit Umkehrverzweigungen umfasst, während jedes Bit des Resultat-Worts in Übereinstimmung mit der zugeordneten Resultat-Variablen und einer Parität der Anzahl der Umkehrverzweigungen definiert wird, die im Laufe der Ausführung benutzt werden.

**5.** Vorrichtung nach einem der vorangehenden Ansprüche, **dadurch gekennzeichnet, dass** die erste Speicherzone eingerichtet ist, um eine Sequenz von Daten eines zweidimensionalen Bildes in Form einer Vielzahl von Bits zu speichern, die wenigstens ein Bit pro Pixel dieses Bildes umfasst, während der Zugriffsmodul eingerichtet ist, um eine einem laufenden Pixel (X) zugeordnete Umgebung zu bezeichnen, die acht Pixel (V0, V1, V2, V3, V4, V5, V6, V7), erste Nachbarn des laufenden Pixels (X) auf einer Seite oder einer Spitze, umfasst.

**6.** Vorrichtung nach Anspruch 5, **dadurch gekennzeichnet, dass** der Rechenmodul eingerichtet ist, um als Ausgang ein Resultat-Wort zu liefern, abhängig von den Pixeln der Umgebung, und variabel je nach dem, ob das laufende Pixel (X) ein einfacher Punkt ist oder nicht, wobei ein laufendes Pixel definiert wird als ein einfacher Punkt eines zweidimensionalen Bildes, wenn ein oder mehrere der Pixel der diesem Pixel zugeordneten Umgebung, notwendigerweise paarweise benachbart auf einer Seite oder einer Spitze, Bitwerte gleich einem festgelegten Wert haben, während wenigstens eines der dem laufenden Pixel (X) auf einer Seite benachbarten Pixel (V1, V3, V4, V6) einen konjugierten Bitwert des genannten festgelegten Werts hat.

**7.** Vorrichtung nach Anspruch 6 in Kombination mit einem der Ansprüche 3 und 4, **dadurch gekennzeichnet, dass** die Eingangsinstruktion eingerichtet ist, um ein Bit von einem der vier dem Pixel (X) auf einer Seite benachbarten Pixel (V3, V1, V4, V6) zu testen, während der Testinstruktionensatz eingerichtet ist, um einerseits die Bits der drei dem laufenden Pixel auf einer Seite benachbarten Pixel (V3, V1, V4) zu vergleichen, und dies unabhängig von den Werten der Bits der anderen Pixel der Umgebung, und andererseits, um ein an einer Spitze (V0, V2, V5, V7) benachbartes Pixel nur zu analysieren, wenn zwei Pixel der Umgebung (V1,V3; V1,V4; V3,V6; V4,V6), jedes diesem Pixel und dem laufenden Pixel auf einer Seite benachbart, Bitwerte gleich dem genannten konjugierten Wert haben.

**8.** Vorrichtung nach einem der vorangehenden Ansprüche, **dadurch gekennzeichnet, dass** die erste Speicherzone fähig ist, eine Sequenz von Daten eines dreidimensionalen Bildes in Form einer Vielzahl von Bits zu speichern, die wenigstens ein Bit pro Elementarwürfel dieses Bildes umfasst, während der Zugriffsmodul eingerichtet ist, um eine einem laufenden Elementarwürfel (X) zugeordnete Umgebung zu bezeichnen, die sechsundzwanzig Elementarwürfel (V0, ... V25), erste Nachbarn des Elementarwürfels (X), umfasst, wobei sechs (V4, V10, V12, V13, V15, V21) die Mitte der Seiten eines Parallelflachs besetzen, dessen Zentrum der laufende Elementarwürfel (X) ist, acht (V0, V2, V6, V8, V17, V19, V23, V25) die Spitzen besetzen, und zwölf (V1, V3, V5, V7, V9, V11, V14, V16, V18, V20, V22, V24) die Mitten der Kanten besetzen.

**9.** Vorrichtung nach Anspruch 8, **dadurch gekennzeichnet, dass** der Rechenmodul eingerichtet ist, um als Ausgang ein Resultat-Wort zu liefern, abhängig von den Elementarwürfeln der Umgebung, und variabel je nach dem, ob der laufende Elementarwürfel (X) ein einfacher Punkt ist oder nicht, wobei ein laufender Elementarwürfel definiert wird als ein einfacher Punkt eines dreidimensionalen Bildes, wenn diesem laufenden Elementarwürfel zugeordnete Elementarwürfel der Umgebung mit jeweiligen Bitwerten gleich einem festgelegten Wert paarweise benachbart sind auf einer Fläche, einer Seite oder einer Spitze, und wenn davon wenigstens einer existiert, während Elementarwürfel der Umgebung von jeweiligen konjugierten Bitwerten des genannten festgelegten Werts dem laufenden Elementarwürfel (X) auf einer Seite (V4, V10, V12, V13, V15, V21) benachbart sind und miteinander verbunden sind durch einen Elementarwürfel mit einem Bitwert gleich dem genannten konjugierten Wert, dem laufenden Elementarwinkel (X) an einer Kante (V1, V3, V5, V7, V9, V11, V14, V16, V18, V20, V22, V24) benachbart, und dass davon wenigstens einer existiert.

**10.** Vorrichtung nach Anspruch 9 in Kombination mit einem der Ansprüche 3 und 4, **dadurch gekennzeichnet, dass** die Eingangsinstruktion eingerichtet ist, um ein Bit von einem der vier dem Elementarwürfel (X) auf einer Seite benachbarten Elementarwürfel (V3, V1, V4, V6) zu testen, während der Testinstruktionensatz eingerichtet ist, um einerseits die Bits der fünf Elementarwürfel der Umgebung (V4, V10, V12, V13, V15) zu vergleichen, von denen jeder eine der sechs Mitten der Seiten (V4, V10, V12, V13, V15, V21) besetzt, und dies unabhängig von den Bits der anderen Elementarwürfel der Umgebung, und andererseits, um das Bit von einem der benachbarten Elementarwürfel einer Seite nur zu analysieren, wenn der die Mitte dieser Seite besetzende Elementarrürfel (V4, V10, V12, V14, V16, V22) einen Bitwert gleich dem genannten konjugierten Wert hat.

**11.** Vorrichtung nach einem der Ansprüche 6, 7, 9 und 10, **dadurch gekennzeichnet, dass** es außerdem eine Einrichtung zur Detektion von Endpunkten von Linien und/oder Flächen des Bildes enthält, während der Rechenmodul wenigstens eine Resultat-Instruktion umfasst, eingerichtet um gemeinsam mit den Endinstruktionen und den Detektionseinrichtungen zu kooperieren, um ein Resultat-Wort eines laufenden Elements (X) zu bezeichnen, variabel je nach dem, ob dieses laufende Element (X) einerseits ein einfacher Punkt ist oder nicht, und andererseits ein Endpunkt ist oder nicht, was ermöglicht, eine Verdünnung von Linien und/oder Flächen des Bildes vorzunehmen.

**12.** Vorrichtung nach einem der Ansprüche 3 bis 11, **dadurch gekennzeichnet, dass** der Rechenmodul eingerichtet ist, um ein Resultat-Wort (V15, V16, V17) auf der Basis von mehreren laufenden Elementen (V4, V7, V10), ersten Nachbarn der Sequenz, zu bewerten, und dadurch, dass der Zugriffsmodul eingerichtet ist, um eine Umgebung zu bezeichnen, die diese laufenden Elemente sowie Elemente der Erste-Nachbarn-Sequenz der laufenden Elemente umfasst, während die Resultat-Variable repräsentativ ist für den Wahrheitsgehalt oder die Richtigkeit einer Hypothese ("falsch", "wahr"), formuliert auf jedem Bit des einem laufenden Element zugeordneten Resultat-Worts.

**13.** Vorrichtung nach Anspruch 12, **dadurch gekennzeichnet, dass** der Rechenmodul eingerichtet ist, um ein Resultat-Wort einer Bilderosions- und/oder -dilatationsfunktion zu bewerten, indem jedem Stromelement ein Resultat-Bit von festgelegtem Wert zugeteilt wird, wenn alle Elemente der Umgebung jeweils Bitwerte gleich dem genannten festgelegten Wert haben, und andernfalls ein Bit-Resultat mit konjugiertem Wert haben.

**14.** Vorrichtung nach Anspruch 11 in Kombination mit Anspruch 13, **dadurch gekennzeichnet, dass** sie ein Bildverwaltungssystem umfasst, fähig mit den Steuereinrichtungen zusammenzuwirken, um einem Benutzer zu ermöglichen, eine Verarbeitungsfunktion unter einer Bilderosion, einer Bilddilatation und einer Verdünnung von Linien und/oder Flächen auszuwählen, während der Rechenmodul mit einem Satz Instruktionen ausgestattet ist, optimiert durch eine binäre Entscheidungsbaum-Reduktionstechnik, der gewählten Verarbeitungsfunktion zugeordnet.

**15.** Vorrichtung nach einem der vorangehenden Ansprüche, **dadurch gekennzeichnet, dass** die genannten Erfassungsdaten ein medizinisches Bild eines biologischen, insbesondere menschlichen Gewebes betreffen.

FIG.1

FIG.2a

FIG.2b

FIG.2c

| V 0 | V 1 | V 2 |
|-----|-----|-----|
| V 3 | X | V 4 |
| V 5 | V 6 | V 7 |

FIG.3

| 1 | 0 | 1 |
|---|---|---|
| 1 | 1→0 | 1 |
| 1 | 1 | 1 |

FIG.4a

| 0 | 0 | 0 |
|---|---|---|
| 1 | 0→1 | 0 |
| 0 | 0 | 0 |

FIG.4b

FIG.5a

FIG.5b

| V 0 | V 3 | V 6 | V 9 | V 12 |
|-----|-----|-----|-----|------|
| V 1 | V 4 | V 7 | V 10 | V 13 |
| V 2 | V 5 | V 8 | V 11 | V 14 |

FIG.6a

| | | | | |
|-----|-----|-----|-----|------|
| | | V 15 | V 16 | V 17 | |

FIG.6b

FIG.11a

FIG.11b

FIG.8

FIG.7

FIG.9a

FIG.9b

FIG.9c

FIG.9d

FIG.9e

FIG.9f

FIG.10